# FASCICULE DE BREVET EUROPEEN

(11) **EP 3 491 069 B1**
(45) Date de publication et mention de la délivrance du brevet: **17.06.2020**
(21) Numéro de dépôt: 17751443.7
(22) Date de dépôt: 26.07.2017
(51) Int. Cl.: C08L 95/00

(54) **AGENTS FLUXANTS POUR LIANTS HYDROCARBONES**
FLUSSMITTEL FÜR BITUMINÖSE BINDEMITTEL
FLUXING AGENTS FOR BITUMINOUS BINDERS

(30) Priorité: 26.07.2016 FR 1657180; 27.04.2017 FR 1753676
(43) Date de publication de la demande: 05.06.2019
(73) Titulaire: Rhodia Operations, 75009 Paris (FR); Eurovia, 92500 Rueil-Malmaison (FR)
(72) Inventeur: BOURDETTE, Arnaud, 77500 Chelles (FR); DELFOSSE, Frédéric, 33600 Pessac (FR); LABEAU, Marie-Pierre, 92310 Sevres (FR); LEBARBÉ, Thomas, 33980 Audenge (FR); MARTIN, Hélène, 92320 Chatillon (FR); ROUSSEAU, Simon, 33400 Talence (FR); PIERRE, Marie-Laure, 33140 Villenave D'Ornon (FR)
(74) Mandataire: Regimbeau
(86) Numéro de dépôt international: PCT/FR2017/052082
(87) Numéro de publication internationale: WO 2018/020154

(56) Documents cités:
- FR-A1- 2 894 587
- FR-A1- 2 960 890
- US-A1- 2012 149 626

## Description

La présente invention a trait au domaine des agents fluxants pour liants hydrocarbonés, utilisables notamment dans des applications routières. Plus précisément, l'invention concerne l'utilisation, à titre d'agent fluxant, d'un composé volatil spécifique de formule (I) telle que définie ci-après dans une composition comprenant un liant hydrocarboné employée pour la réalisation d'un produit bitumeux à base de particules minérales solidarisées par ladite composition comprenant le liant hydrocarboné.

Dans les produits dits «bitumineux », des particules minérales sont liées par un liant hydrocarboné, notamment un bitume. Les liants hydrocarbonés qui sont employés dans les produits bitumineux de ce type sont des produits très visqueux, typiquement viscoélastiques, qui nécessitent, pour être manipulés, d'être chauffés, mis en émulsion et/ou additivés par des composés dits « fluxants » qui permettent, entre autres, de réduire leur viscosité. Ces fluxants, peuvent être d'origine pétrolière, pétrochimique, carbochimique voire végétale.

Des fluxants usuels sont les fluxants d'origine pétrolière qui incluent :
- les «fluxants pétroliers» qui sont des produits issus de la distillation du pétrole brut (fraction(s) légère(s)), ayant pu subir éventuellement une opération d'hydrotraitement. On peut citer par exemple les agents fluxants commercialisés par Total (Greenflux® 2000, Greenflux® SD notamment).
- les « fluxant pétrochimiques » qui sont des produits issus de la distillation du pétrole brut (fraction(s) légère(s)), ayant subi au moins une opération de craquage thermique et de distillation complémentaire. On peut citer par exemple les agents fluxants commercialisés par VFT France (Adheflux®).

De tels fluxants d'origine pétrolière sont très satisfaisants en termes de résultats. En effet, lorsqu'ils sont ajoutés à un liant hydrocarboné, ils permettent d'en abaisser ponctuellement la viscosité tout en assurant généralement que les performances mécaniques du produit bitumineux à base de ce liant hydrocarboné fluxé ne soient pas sensiblement détériorées et les rendent ainsi propres à leur usage routier, en particulier avec une montée en cohésion suffisante.

Ces fluxants d'origine pétrolière sont des produits volatils : après leur incorporation dans le liant hydrocarboné où ils assurent la diminution souhaitée de la viscosité, ils s'évaporent, ce par quoi le liant retrouve sensiblement ses caractéristiques premières. Ces fluxants libérés ont cependant de nombreux impacts environnementaux négatifs. De plus, leur usage est dangereux et inconfortable (vapeurs nocives et désagréables et danger d'inflammabilité).

D'autres agents fluxants volatils sont les fluxants d'origine carbochimique qui sont des produits issus de la pyrolyse du charbon, ayant subi au moins une opération de distillation, qui présentent l'inconvénient majeur d'être reconnus cancérigènes.

Pour remplacer les agents fluxants volatils précités, il a été proposé des fluxants d'origine naturelle non fossile (origine végétale ou animale), qui permettent d'éviter le dégagement de composés organiques volatils nocifs. Un fluxant d'origine naturelle non fossile est une huile naturelle non fossile, un de ses dérivés tels que les esters d'acide gras, ou un mélange de deux ou plus de ces huiles et/ou dérivés d'huile. On peut en particulier citer les huiles végétales telles que les huiles de tournesol, de colza, d'arachide, de coprah, de lin, de palme, de soja, d'olive, de ricin, de maïs, de courge, de pépins de raisin, de jojoba, de sésame, de noix, de noisette, de bois de chine, le tall oil (huile de tall), leurs dérivés, ainsi que leur mélanges. La plupart de ces huiles comprennent majoritairement des acides gras au moins en C₁₆ insaturés. De tels fluxants sont par exemple décrits dans les demandes FR 2 910 477, EP 0 900 822, FR 2 721 043 ou FR 2 891 838.

Avec les fluxants non volatil du type des huiles précitées, l'augmentation de consistance du liant dans le produit final (après répandage ou après enrobage) ne se fait pas par évaporation contrairement au cas des fluxants volatils, mais plutôt par réticulation, typiquement suite à des réactions radicalaires, les chaînes grasses insaturées réagissant en présence de l'oxygène de l'air. Ces réactions, qui peuvent être catalysées par ajout d'agents siccativants tels que des sels métalliques, comprennent la formation de ponts peroxyde -O-O- sur les chaînes insaturées. Ces ponts sont instables et conduisent à la formation de radicaux libres qui eux même vont réagir avec d'autres insaturations d'autres chaînes. Cette technique de réticulation du fluxant s'applique ainsi uniquement aux composés insaturés. La sélection du fluxant s'effectue à partir de l'indice d'iode qui caractérise le taux d'insaturations d'un composé et donc sa capacité à réagir par siccativation.

S'ils ont moins de retombée sur l'environnement et sur le bien-être et la santé des manipulateurs, les fluxants d'origine naturelle non fossile sont cependant moins satisfaisants que les fluxants d'origine pétrolière en termes de résultats. En effet, les résultats de montée en cohésion sont moins bons. Ils conduisent le plus souvent à des désordres en cas d'averses, chaleurs ou trafics trop denses, des problèmes de ressuages, liés notamment à une mauvaise adhésion du liant hydrocarboné fluxé sur les particules solides minérales.

Ainsi, les produits bitumineux à base de bitume fluxé avec des fluxants d'origine naturelle non fossile sont actuellement considérés comme n'étant pas adaptés au trafic modéré à fort et aux variations climatiques.

Un but de l'invention est de fournir une solution :
- permettant d'abaisser la viscosité d'un liant hydrocarboné
- permettant de disposer d'un liant hydrocarboné de mouillabilité bien adaptée vis-à-vis des particules solides minérales
- sans présenter les inconvénients précités

A cet effet, il est proposé selon la présente invention d'utiliser à titre de fluxants, des composés particuliers, dont les inventeurs ont maintenant découvert, dans le cadre des travaux qui ont conduit à la présente invention, (1) qu'ils se comportent comme des fluxants volatils intéressants qui permettent, une fois incorporés dans des compositions comprenant un liant hydrocarboné et avant leur évaporation, de diminuer la viscosité du liant hydrocarboné, qui peut dès lors être mis en œuvre plus aisément, mais sans présenter les inconvénients des fluxants volatils usuels en termes de répercussion sur l'environnement et de toxicité pour leur manipulateur; et (2) qu'ils induisent en outre pour la composition une mouillabilité satisfaisante vis-à-vis des particules solides minérales, de même ordre que celles des meilleurs agents fluxants actuellement utilisés, tel que le Greenflux® SD, qui permet notamment d'adhérer correctement aux particules solides minérales .

L'invention a plus précisément pour objet l'utilisation, à titre d'agent fluxant, d'au moins un composé répondant à la formule (I)

R¹-X-R-Y-R² (I)

où :
R¹ et R², identiques ou différents, sont des chaînes hydrocarbonées, linéaires ou ramifiées, en C₂-C₁₁;
chacun de -X- et -Y-, identiques ou différents, est un groupe -O-(C=O)- ;
-(C=O)-O- ; -NR'-(C=O)- avec R' représentant un atome d'hydrogène ou un radical alkyle en C₁-C₄, ou (C=O)-NR'- avec R' représentant un atome d'hydrogène ou un radical alkyle en C₁-C₄,
le groupe -R- est une chaîne hydrocarbonée divalente, en C₁-C₁₀, linéaire ou
ramifiée, et éventuellement interrompue par un ou plusieurs atomes d'oxygène dans une composition comprenant un liant hydrocarboné pour la préparation d'un produit bitumeux à base de particules solides minérales en contact avec ledit liant hydrocarboné,
où ledit composé de formule (I) est présent dans ladite composition lors de la mise en contact de ladite composition avec lesdites particules solides minérales.

On peut employer selon l'invention un unique composé de formule (I) ou bien un mélange de plusieurs composés de formule (I).

Les composés de formule (I), seuls ou en mélanges, s'avèrent être des composés dont les travaux des inventeurs ont montrés qu'ils sont volatils au sein d'un liant hydrocarboné de type bitume et qu'ils assurent donc un effet similaire aux fluxants d'origine pétrolière, mais sans les problématiques de leur impact sur l'environnement et de toxicité pour le manipulateur.

Par ailleurs, les composés de formule (I), avant leur volatilisation, assurent non seulement une diminution ponctuelle de la viscosité du liant, mais encore une mouillabilité des particules solides minérales par le liant du même ordre que celle des meilleurs agents fluxants actuellement utilisés.

Le composé de formule (I) tel qu'il est employé selon l'invention n'est pas uniquement employé pour réduire la viscosité du liant hydrocarboné, mais aussi, plus spécifiquement pour assurer une bonne mouillabilité des particules solides minérales par la composition comprenant le liant. A cet effet, le composé de formule (I) est présent dans la composition bitumineuse pendant tout ou partie de la période de temps où la composition est mise en contact avec les particules solides minérales. En pratique, le composé de formule (I) peut notamment être ajouté à la composition comprenant le liant hydrocarboné selon l'une et/ou l'autre des 3 variantes compatibles suivantes :
- variante 1 : le composé de formule (I) est ajouté au moins pour partie (si la variante 2 et/ou la 3 est également mise en œuvre), voire en totalité (sinon), à la composition comprenant le liant hydrocarboné, puis la composition comprenant le composé de formule (I) est mise en contact avec les particules solides minérales avant évaporation complète du composé de formule (I) hors de la composition (en d'autres termes, ledit composé de formule (I) est encore présent au moins pour partie dans la composition lors de la mise en contact avec les particules solides minérales, de préférence en une quantité suffisante dans la composition pour y assurer un rôle de fluxant) ;
   et/ou
- variante 2 : le composé de formule (I) est ajouté au moins pour partie (si la variante 1 et/ou la 3 est également mise en œuvre), voire en totalité (sinon), en même temps que les particules solides minérales à la composition comprenant le liant hydrocarboné et/ou
- variante 3 : le composé de formule (I) est ajouté au moins pour partie (si la variante 1 et/ou la 2 est également mise en œuvre), voire en totalité (sinon), à un pré-mélange contenant les particules solides minérales et la composition comprenant le liant hydrocarboné

A noter que lorsque la variante 2 et/ou 3 est employée, il peut tout à fait être envisagé d'utiliser, dans une étape préalable (E0), des composés de formule (I) à titre de fluxants dans la composition à base de liant (par exemple pour fabriquer une composition de type émulsion de bitume), puis de laisser les composés de formule (I) employés s'évaporer totalement. Dans ce cas, pour mettre en œuvre la variante 2 ou 3, des composés de formule (I), identiques ou différents de ceux employés dans l'étape préalable (E0), seront introduits conjointement et/ou après le mélange de la composition avec les particules solides minérales.

Les composés de formule (I) selon l'invention permettent d'abaisser la viscosité du liant hydrocarboné, dans lequel ils sont ajoutés, tout en assurant une bonne mouillabilité des particules solides minérales par la composition comprenant le liant.

Avantageusement, les composés de formule (I) selon l'invention permettent également d'obtenir un liant performant après stabilisation (ces performances sont vues au travers des résultats de pénétrabilité, de température bille-anneau, éventuellement de point de fragilité Fraass)

De préférence, les composés de formule (I) selon l'invention permettent une diminution de la viscosité du liant hydrocarboné lors de sa mise en œuvre sans en affecter ses performances et sa capacité à mouiller les particules solides minérales.

Dans une variante de l'invention, la composition comprend en outre un composé répondant à la formule (II)

R¹-X-R-Y-R² (II)

où :
R¹ et R², identiques ou différents, sont des chaînes hydrocarbonées, linéaires ou ramifiées, en C₁-C₁₁, de préférence en C₁-C₉ ; et où au moins un de R¹, R² est un radical méthyle
-X- et -Y-, -R- sont tels que définis pour la formule (I).

On peut employer selon l'invention un unique composé de formule (II) ou bien un mélange de plusieurs composés de formule (II).

Les composés de formule (II), seuls ou en mélanges, s'avèrent être des composés dont les travaux des inventeurs ont montrés qu'ils sont volatils au sein d'un liant hydrocarboné de type bitume.

Ce composé de formule (II) pourra avantageusement être introduit en mélange avec le composé de formule (I), selon l'une et ou l'autre des variantes 1, 2 et/ou 3 précitées ou pendant l'étape (E0). De façon plus générale, un agent fluxant et/ou un ou plusieurs composés de formule (II) pourront être ajoutés à la composition avant et/ou pendant et/ou après (et de préférence avant et/ou pendant) la mise en contact des particules solides minérales avec la composition, indépendamment du moment d'introduction du composé de formule (I). Selon un mode particulier, au moins une partie des composés de formule (I) et au moins une partie des composés de formule (II) sont présentes simultanément dans la composition, de préférence au moins pendant une partie du temps où la composition est en contact avec les particules solides minérales.

Le rapport massique teneur en composé de formule (I) / teneur en composé de formule (II) est avantageusement supérieur ou égal à 1, plus avantageusement compris entre 1 et 5, encore. plus avantageusement compris entre 1 et 3.

Les définitions ci-après seront adoptées dans toute la présente description :

### Liant hydrocarboné :

On entend par "liant hydrocarboné " tout liant hydrocarboné d'origine fossile ou végétale utilisable pour la réalisation de produits dits « bitumineux », ce liant hydrocarboné pouvant typiquement être ou non un bitume, et être pur ou modifié, notamment par ajout de polymère(s).

Le liant pourra être un liant mou à dur, avantageusement d'un grade allant de 10/20 à 160/220.

Le liant hydrocarboné peut être un bitume, pur ou modifié par des polymères.

Le « polymère » modifiant le bitume auquel il est fait référence ici, peut être choisi parmi les polymères naturels ou synthétiques. Il s'agit par exemple d'un polymère de la famille des élastomères, synthétiques ou naturels, et de manière indicative et non limitative :
- les copolymères statistiques, multi-séquencés ou en étoile, de styrène et de butadiène ou d'isoprène en toutes proportions (en particulier copolymères blocs de styrène-butadiène-styrène (SBS), de styrène-butadiène (SB, SBR pour styrène-butadiène rubber), de styrène-isoprène-styrène (SIS)) ou les copolymères de même famille chimique (isoprène, caoutchouc naturel, ...), éventuellement réticulés in-situ,
- les copolymères d'acétate de vinyle et d'éthylène en toutes proportions,
- les copolymères de l'éthylène et d'esters de l'acide acrylique, méthacrylique ou de l'anhydride maléique, les copolymères et terpolymères d'éthylène et de méthacrylate de glycidyle-) et les polyoléfines.

Le polymère modifiant le bitume peut être choisi parmi les polymères de récupération, par exemple des « poudrettes de caoutchouc » ou autres compositions à base de caoutchouc réduits en morceaux ou en poudre, par exemple obtenues à partir de pneus usagés ou d'autres déchets à base de polymères (câbles, emballage, agricoles, ...) ou encore tout autre polymère couramment utilisé pour la modification des bitumes tels que ceux cités dans le Guide Technique écrit par l'Association Internationale de la Route (AIPCR) et édité par le Laboratoire Central des Ponts et Chaussées "Use of Modified Bituminous Binders, Special Bitumens and Bitumens with Additives in Road Pavements" (Paris, LCPC, 1999), ainsi que tout mélange en toute proportion de ces polymères.

La composition comprenant le liant peut être sous forme d'un liant anhydre ou sous forme d'une émulsion (émulsion de bitume typiquement).

L'émulsion est une dispersion du liant (bitume, liant de synthèse ou liant végétal) dans une phase continue, typiquement une phase aqueuse, par exemple de l'eau. On peut ajouter à l'émulsion un agent tensioactif, qui permet notamment de la stabiliser.

Au cours de la fabrication d'une émulsion, le liant est dispersé en fines gouttelettes dans l'eau par exemple par une action mécanique. L'ajout d'un agent tensio-actif forme un film protecteur autour des gouttelettes, les empêchant de s'agglomérer et permettant ainsi de maintenir le mélange stable et de l'entreposer pendant un certain temps. La quantité et le type d'agent tensio-actif ajoutés au mélange déterminent la stabilité de l'émulsion à l'entreposage et influent sur le temps de cure au moment de la pose. L'agent tensioactif peut être chargé positivement, chargé négativement, amphotère ou non-ionique.

L'agent tensioactif est avantageusement d'origine pétrolière, végétale, animale et leur mélanges (par exemple l'agent tensioactif peut être d'origine végétale et pétrolière). L'agent tensioactif peut être un savon alcalin d'acides gras : sels de sodium ou de potassium d'un acide organique (résine par exemple). L'émulsion est alors anionique. L'agent tensioactif peut être un savon acide, lequel est généralement obtenu par action de l'acide chlorhydrique sur une ou deux amines. L'émulsion est alors cationique. Parmi les tensioactifs pertinents en application routière on peut citer : les tensioactifs commercialisés par Akzo NOBEL (Redicote® E9, Redicote® EM 44, Redicote® EM 76), les tensioactifs commercialisés par CECA (Dinoram® S, Polyram® S, Polyram® L 80), les tensioactifs commercialisés par Meadwestvaco (Indulin® R33, Indulin® R66, Indulin® W5). On pourra utiliser un ou plusieurs de ces tensioactifs, seuls ou en mélanges.

L'émulsion peut contenir du latex synthétique ou naturel. Par latex on entend une dispersion de polymères (polyisoprène, SBS, SB, SBR, polymères acryliques, ...) réticulés ou non en phase aqueuse. Ce latex est incorporé dans la phase aqueuse avant émulsification ou en ligne pendant la fabrication de l'émulsion soit encore après fabrication de l'émulsion.

La composition comprenant le liant peut se présenter en tout ou partie sous la forme d'une mousse typiquement obtenue un procédé d'injection dans l'arrivée du liant d'une quantité d'eau, et éventuellement d'air, l'eau étant pure ou pouvant comprendre des additifs permettant de modifier les propriétés d'adhésivité voire rhéologiques du liant.

Quelle que soit sa forme, la composition comprenant le liant, typiquement au sein du liant, des additifs couramment utilisés dans le domaine routiers, tels que des compositions à base de caoutchouc réduit en poudre (« poudrettes de caoutchouc »), des cires végétales ou d'origine pétrochimique, des dopes d'adhésivité.

### Particules solides minérales

Par "particules solides minérales", on entend dans la présente description toutes particules solides utilisables pour la réalisation de produits bitumineux notamment pour la construction routière, comprenant notamment les granulats minéraux naturels (gravillons, sable, fines) issus de carrière ou de gravière, les produits de recyclage tel que les agrégats d'enrobés résultant du recyclage des matériaux récupérés lors de la réfection des routes ainsi que des surplus de centrales d'enrobage, les rebuts de fabrication, les « shingles » (provenant du recyclage des membranes de toitures), les granulats provenant du recyclage de matériaux routiers y compris les bétons, les laitiers en particulier les scories, les schistes en particulier la bauxite ou le corindon, les poudrettes de caoutchouc provenant du recyclage des pneus notamment, les granulats artificiels de toute origine et provenant par exemple de mâchefers d'incinération des ordures ménagères (MIOM), ainsi que leurs mélanges en toutes proportions.

Les granulats minéraux naturels comprennent :
- des éléments inférieurs à 0,063 mm (filler ou fines)
- du sable dont les éléments sont compris entre 0,063 mm et 2 mm ;
- des gravillons, dont les éléments ont des dimensions
   ∘ comprises entre 2 mm et 6 mm ;
   ∘ supérieures à 6 mm ;

La taille des granulats minéraux est mesurée par les essais décrits dans la norme NF EN 933-2 (version mai 1996).

On entend par « agrégats d'enrobés » des enrobés (mélange de granulats et de liants bitumineux) provenant de fraisage de couches d'enrobé, de concassage de plaques extraites de chaussées en enrobées, de morceaux de plaques d'enrobés, de déchets d'enrobé ou de surplus de productions d'enrobés (les surplus de productions sont des matériaux enrobés ou partiellement enrobés en centrale résultant des phases transitoires de fabrication). Ces éléments et les autres produits de recyclage peuvent atteindre des dimensions jusqu'à 31,5 mm.

On désigne également les « particules solides minérales » par les termes « fraction minérale 0/D ». Cette fraction minérale 0/D peut être séparée en deux granulométries : la fraction minérale 0/d et la fraction minérale d/D.

Les éléments les plus fins (la fraction minérale 0/d) seront ceux compris dans la plage comprise entre 0 et un diamètre maximal que l'on peut fixer entre 2 et 6 mm (de 0/2 à 0/6), avantageusement entre 2 et 4 mm. Les autres éléments (diamètre minimal supérieur à 2, 3, 4, 5 ou 6 mm ; et environ jusqu'à 31,5 mm) constituent la fraction minérale d/D.

### Composé de formule (I)

On utilise dans l'invention un composé, ou mélange de composés, répondant à la formule (I)

R¹-X-R-Y-R² (I)

où :
R¹ et R², identiques ou différents, sont des chaînes hydrocarbonées, linéaires ou ramifiées, en C₂-C₁₁, de préférence en C₂-C₉ ;
chacun de -X- et -Y-, identiques ou différents, est un groupe -O-(C=O)- ; -(C=O)-O- ;
-NR'-(C=O)- avec R' représentant un atome d'hydrogène ou un radical alkyle en C₁-C₄, ou (C=O)-NR'- avec R' représentant un atome d'hydrogène ou un radical alkyle en C₁-C₄, le groupe -R- est une chaîne hydrocarbonée en C₁-C₁₀, divalente, linéaire ou ramifiée, et éventuellement interrompue par un ou plusieurs atomes d'oxygène.

On note que selon une variante de l'invention, le composé de formule (I) peut se présenter sous la forme d'un mélange comprenant différents composés de formule (I). Dans la demande, sauf mention explicite de la présence d'au moins deux composés, "un" composé peut désigner un unique composé répondant à la formule (I) ou un mélange ou une association de plusieurs composés répondant à la formule (I).

Dans les composés de formule (I) utilisés selon l'invention, le nombre total d'atomes de carbone est de préférence compris entre 7 et 16. Selon un mode de réalisation, le nombre total d'atome de carbone est supérieur ou égal à 8, voire supérieur ou égal à 9. Selon un mode de réalisation, le nombre total d'atome de carbone est de 8, 9 ou 10. Selon un mode particulier, le nombre d'atomes de carbone est supérieur ou égal à 10, par exemple à 11, et notamment, supérieur ou égal à 12. Par ailleurs, on préfère en général que le nombre total d'atomes de carbone soit inférieur ou égal à 15, par exemple inférieur ou égal à 14. Ainsi, par exemple, le nombre total d'atome de carbone peut être compris entre 8 et 15, par exemple entre 8 et 12 ou entre 10 et 15 ou entre 10 et 12 ou entre 12 et 14.

Le nombre total d'atome de carbone défini dans le paragraphe précédent est en particulier valable lorsque les groupes R, R¹ et R² sont des groupes saturés, linéaires ou ramifiés, et notamment lorsqu'il s'agit de groupes saturés et ramifiés.

Lorsque les composés de formule (I) présentent des chaîne linéaires, les groupes R¹ et R² sont typiquement des groupes saturés, généralement identiques, et comportant de 2 à 5 atomes de carbone, et avantageusement 2, 3 ou 4 atomes de carbone. Dans ce cas de figure, le groupement R saturé comporte en général de 1 à 8 atomes de carbone, par exemple entre 2 et 7, notamment entre 2et 6, avec un nombre total de carbone dans le composé de formule (I) qui peut être compris entre 8 et 16, en particulier entre 10 et 16, par exemple entre 8 et 12 ou entre 10 et 12 ou entre 12 et 14.

Les composés de formule (I) ont par ailleurs de préférence une masse moléculaire comprise entre 170 g/mol et 280 g/mol, plus avantageusement comprise entre 180 g/mol et 280 g/mol, plus avantageusement comprise entre 190 g/mol et 275 g/mol, encore plus avantageusement comprise entre 200 g/mol et 265 g/mol ou plus avantageusement comprise entre 170 g/mol et 275 g/mol, encore plus avantageusement comprise entre 170 g/mol et 265 g/mol.

Les composés de formule (I) s'avèrent être volatils dans la plupart des liants hydrocarbonés et notamment dans le bitume, c'est-à-dire qu'avec le temps ils vont s'évaporer des compositions bitumineuses les comprenant, permettant ainsi une montée en cohésion des produits bitumineux à base desdites compositions bitumineuses.

R' représente avantageusement un atome d'hydrogène ou un groupe méthyle ou un groupe éthyle.

Les groupes R¹ et R², identiques ou différents, représentent avantageusement un groupe alkyle, aryle, alkyaryle, ou arylalkyle, linéaire ou branché, cyclique ou non cyclique, saturé ou insaturé et le plus souvent saturé, en C₂-C₁₁, typiquement en C₂-C₉.

Les groupes R¹ et R², identiques ou différents, peuvent notamment être choisis parmi les groupes éthyle, n-propyle, isopropyle, benzyle, phényle, n-butyle, isobutyle, n-pentyle, isoamyle, cyclohexyle, hexyle, n-hexyle, heptyle, isooctyle, 2-éthylhexyle, 2-propylhexyle.

R¹ et R² contiennent chacun avantageusement de 2 à 5 atomes de carbone, par exemple de 2 atomes de carbone ou de 3 à 5 atomes de carbone. Typiquement (notamment pour des raisons de facilité de synthèse) R¹ et R² sont identiques et sont choisis parmi les groupes éthyle, n-propyle, isopropyle, n-butyle, isobutyle, n-pentyle, isoamyle, en particulier éthyle ou isobutyle.

Le groupe R représente avantageusement un radical alcanediyle en C₁-C₁₀ linéaire ou ramifié, un radical alcènediyle en C₂-C₁₀ linéaire ou ramifié, ou bien une chaîne alcoxylée, notamment ethoxylée et/ou propoxylée, en C₂-C₁₀.

On peut utiliser à titre de composés de formule (I) des composés dans lequel R est tel que défini dans l'un des modes suivants, ou un mélange de composé(s) selon ces modes de réalisation:
▪Mode 1 :R est un radical de formule -(CH₂)ᵣ-, où r est un nombre moyen compris entre 2 et 8 inclus. En particulier, R est un radical de formule -(CH₂)ᵣ-, où r est un nombre moyen compris entre 2 et 4 inclus.
   De préférence, R est choisi de sorte que le composé peut être un mélange de dérivé d'adipate (r = 4), de dérivé de glutarate (r = 3), et de dérivé de succinate (r = 2).
▪Mode 2 : R est un radical alcanediyle en C₃-C₁₀ ramifié. R peut notamment être un groupe en C_{3,} C₄, C₅, C₆, C₇, C₈, C₉, ou un mélange. Il s'agit de préférence d'un groupe en C₄.
   Le groupe R est de préférence choisi parmi les groupes suivants :
   - le groupe R_{MG} de formule -CH(CH₃)-CH₂-CH₂-,
   - le groupe R_{ES} de formule -CH(C₂H₅)-CH₂-, et
   - leurs mélanges.

   De tels mélanges, ainsi que des procédés d'obtention appropriés sont notamment décrits dans les documents WO 2007/101929; WO 2007/141404; WO 2008/009792; WO 2008/062058.
▪Mode 3 :R est un radical alcènediyle linéaire ou ramifié, en C₂-C₈, avantageusement en C₂-C₄.
   Le groupe R est de préférence choisi parmi les groupes suivants :
   - le groupe de formule -CH=CH-, la double liaison étant de configuration Z
   - le groupe de formule -CH=CH-, la double liaison étant de configuration E
   - le groupe de formule -CH(CH₂)-CH₂-, et
   - leurs mélanges.
▪ Mode 4 : R est un radical -(OE/OP)ₙ- où OE/OP sont des groupements alcoxy, de préférence choisis parmi les groupes éthoxy, propoxy et les mélanges éthoxy/propoxy et n un nombre moyen compris entre 1 et 5 inclus et avec un nombre total de carbone de 10 dans le groupe R.

Notamment dans les modes 1 à 4 précités, X et Y sont avantageusement des esters, de préférence des esters de diacides (-X- = -O-(C=O)- ; et Y = -(C=O)-O-) ou des esters de diols (-X- = -(C=O)-O- et Y = -O-(C=O)-)

Avantageusement,
- R¹ et R² sont identiques ou différents et sont chacun choisis parmi les groupes éthyle, n-propyle, isopropyle, n-butyle, isobutyle, n-pentyle, isoamyle, hexyle, n-hexyle, isooctyle, 2-éthylhexyle, 2-propylhexyle ; en particulier éthyle ou isobutyle ;
- X et Y sont avantageusement des esters, de préférence des esters de diacides (-X- = -O-(C=O)- ; et -Y- = -(C=O)-O-) ou des esters de diols (-X- = -(C=O)-O- et -Y- = -O-(C=O)-)
- R est un radical de formule -(CH₂)ᵣ-, où r est un nombre moyen compris entre 2 et 4 inclus. De préférence, R est choisi de sorte que le composé peut être un mélange de diesters d'adipate (r = 4), de diesters de glutarate (r = 3), et de diesters de succinate (r = 2).

Dans un mode de réalisation de l'invention, le composé (I) utilisé dans la présente invention est choisi parmi le diisobutyle adipate, le diisobutyle glutarate ou le diisobutyle succinate, et leurs mélanges.

Un mélange adapté peut par exemple comprendre, en poids par rapport au poids total du mélange, un mélange de 5 à 29 % en poids de diisobutyle adipate (typiquement mesuré par Chromatographie en Phase Gazeuse), de 50 à 72% en poids de diisobutyle glutarate, et de 10 à 32 % en poids de diisobutyle succinate.

On peut utiliser à titre de composé (I), le solvant commercialisé par Solvay sous la dénomination Rhodiasolv® DIB.

Dans un autre mode de réalisation de l'invention, le composé (I) utilisé dans la présente invention est choisi parmi le diéthyle adipate, le diéthyle glutarate ou le diéthyle succinate, et leurs mélanges.

Un mélange adapté peut par exemple comprendre, en poids par rapport au poids total du mélange, un mélange de 4 à 26 % en poids de diéthyle adipate (typiquement mesuré par Chromatographie en Phase Gazeuse), de 52 à 77 % en poids de diéthyle glutarate, et de 12 à 32 % en poids de diéthyle succinate.

On peut utiliser à titre de composé (I), le solvant commercialisé par Solvay sous la dénomination INNROAD® Protect.

Dans encore un mode particulier de réalisation, le composé (I) utilisé dans la présente invention est choisi parmi le diisopropyle adipate, le diisopropyle glutarate ou le diisopropyle succinate, et leurs mélanges.

Un mélange adapté, utilisé dans les exemples et désigné dans la présente description par "DIP", comprend, en poids par rapport au poids total du mélange, un mélange de 5 à 29 % en poids de diisopropyle adipate (typiquement mesuré par Chromatographie en Phase Gazeuse), de 50 à 72% en poids de diisopropyle glutarate, et de 10 à 32 % en poids de diisopropyle succinate.

Selon encore un mode de réalisation possible, le composé (I) utilisé dans la présente invention est choisi parmi le diisoamyle adipate, le diisoamyle glutarate ou le diisoamyle succinate, et leurs mélanges.

Un mélange adapté, utilisé dans les exemples et désigné dans la présente description par "DIA", comprend, en poids par rapport au poids total du mélange, un mélange de 5 à 29 % en poids de diisoamyle adipate (typiquement mesuré par Chromatographie en Phase Gazeuse), de 50 à 72% en poids de diisoamyle glutarate, et de 10 à 32 % en poids de diisoamyle succinate.

### Composé de formule (II)

On peut utiliser dans l'invention un composé répondant à la formule (II)

R¹-X-R-Y-R² (II)

où :
R¹ et R², identiques ou différents, sont des chaînes hydrocarbonées, linéaires ou ramifiées, en C₁-C₁₂, de préférence en C₁-C₁₀ ; et où au moins un de R¹, R² est un radical méthyle
-X- et -Y-, -R- sont tels que définis pour la formule (I).

On note que selon une variante de l'invention, le composé de formule (II) peut se présenter sous la forme d'un mélange de différents composés de formule (II). Dans la demande, sauf mention explicite de la présence d'au moins deux composés, "un" composé peut désigner un unique composé répondant à la formule (II) ou un mélange ou une association de plusieurs composés répondant à la formule (II).

Les composés de formule (II) ont avantageusement une masse moléculaire comprise entre 130 g/mol et 290 g/mol, plus avantageusement comprise entre 140 g/mol et 250 g/mol, encore plus avantageusement comprise entre 150 g/mol et 200 g/mol.

Dans les composés de formule (II) utilisés selon l'invention, le nombre total d'atomes de carbone est de préférence compris entre 5 et 12 Selon un mode de réalisation, le nombre total d'atome de carbone est supérieur ou égal à 6. Par ailleurs, on préfère en général que le nombre total d'atomes de carbone soit inférieur ou égal à 11, par exemple inférieur ou égal à 10. Ainsi, par exemple, le nombre total d'atome de carbone peut être compris entre 6 et 11, par exemple entre 6 et 8.

Le nombre total d'atome de carbone défini dans le paragraphe précédent est en particulier valable lorsque les groupes R, R¹ et R² sont des groupes saturés, linéaires ou ramifiés
-X- et -Y-, -R- sont tels que définis pour la formule (I), y compris les différentes variantes.

Les groupes R¹ et R², identiques ou différents, représentent avantageusement un groupe alkyle, aryle, alkyaryle, ou arylalkyle, linéaire ou branché, cyclique ou non cyclique, saturé ou insaturé et le plus souvent saturé, en C₁-C₁₁, typiquement en C₁-C₉. Au moins un de R¹, R² est un radical méthyle.

Les groupes R¹ et R², identiques ou différents, peuvent notamment être choisis parmi les groupes méthyle, éthyle, n-propyle, isopropyle, benzyle, phényle, n-butyle, isobutyle, n-pentyle, isoamyle, cyclohexyle, hexyle, n-hexyle, heptyle, isooctyle, 2-éthylhexyle, 2-propylhexyle. Au moins un de R¹, R² est un radical méthyle.

Avantageusement, R¹, R² représentent tous deux un radical méthyle.

Un composé de formule (II) selon l'invention peut par exemple être choisi parmi le diméthyle adipate, le diméthyle glutarate, le diméthyle succinate, et leur mélanges.

Un mélange adapté peut par exemple comprendre, en poids par rapport au poids total du mélange, un mélange de diméthyle adipate (par exemple de 4 à 22% en poids, par Chromatographie en Phase Gazeuse), de diméthyle glutarate (par exemple de 55 à 77 % en poids), et de diméthyle succinate (par exemple de 12 à 32 % en poids).

On peut utiliser à titre de composé (II), le solvant commercialisé par Solvay sous la dénomination Rhodiasolv® RPDE ou le solvant commercialisé par Solvay sous la dénomination INNROAD® Boost.

Un autre composé de formule (II) possible, utilisable seul ou en mélange avec le précédent, est un composé pour lequel R¹, R² représentent tous deux un radical méthyle et le groupe R est choisi parmi les groupes suivants :
- le groupe R_{MG} de formule -CH(CH₃)-CH₂-CH₂-,
- le groupe R_{ES} de formule -CH(C₂H₅)-CH₂-, et
- leurs mélanges.
- X- et -Y- sont avantageusement des esters, de préférence des esters de diacides (-X- = -O-(C=O)-; et -Y- = -(C=O)-O-) ou des esters de diols (-X- = -(C=O)-O- et -Y- = -O-(C=O)-).

On peut utiliser à titre de composé (II), le solvant commercialisé par Solvay sous la dénomination Rhodiasolv® IRIS.

### Produits bitumineux

Par « produit bitumineux », dans la présente invention, on entend un produit à base de liant hydrocarboné et de particules solides minérales. On peut en particulier citer les enduits, les enrobés à l'émulsion, les enrobés stockables, les enrobés à chaud, les enrobés tièdes à maniabilité contrôlée qui sont décrits plus en détails ci-après.

Les produits bitumineux peuvent contenir des teneurs importantes (allant de 0% à 100% en poids, avantageusement de 20% à 50% en poids, par rapport au poids total) de produits de recyclage (agrégats de produit asphaltique, agrégats d'enrobé).

### Enduits

Un enduit superficiel, au sens de la présente description, désigne une couche constituée de couche superposées d'un liant hydrocarboné et de particules solides minérales. Il est typiquement obtenu en pulvérisant un liant hydrocarboné puis en épandant sur ce liant des particules solides minérales, en une ou plusieurs couches. L'ensemble est ensuite compacté. Un enduit superficiel nécessite non seulement un liant qui soit suffisamment fluide pour pouvoir être pulvérisé mais également un liant qui permette un bon accrochage des particules solides minérales sur le support.

Ainsi, le fluxant ajouté au liant doit permettre de le ramollir sans pénaliser le mouillage des particules solides minérales par le liant. En outre, le fluxant doit permettre de ramollir le liant lors de sa pulvérisation mais une fois pulvérisé le liant doit durcir rapidement pour répondre également au critère de montée en cohésion. Si le liant ne mouille pas correctement les particules solides minérales, l'adhésion de ce liant sur ces particules ne sera pas satisfaisante voire inacceptable.

L'affinité liant - particules solides minérales est déterminée par la possibilité de mouillage des particules solides minérales par le liant, qui s'apprécie au moyen de l'essai de détermination de l'adhésivité liants-granulats par mesure de la cohésion Vialit (NF EN 12272-3, 2003-07-01).

On a découvert que les composés de formule (I) permettent de fluxer effectivement le liant, avec une montée en cohésion satisfaisante, sans pénaliser l'affinité liant - particules solides minérales.

Le ou les composés de formule (I) sont avantageusement ajoutés en totalité à la composition comprenant le liant hydrocarboné puis la composition comprenant le liant hydrocarboné et le ou les composés de formule (I) est pulvérisée sur les particules solides minérales avant évaporation complète du composé de formule (I) hors de la composition. En d'autres termes, ledit composé de formule (I) est encore présent au moins pour partie lors de la mise en contact du liant fluxé et des particules solides minérales, de préférence en une quantité suffisante dans la composition pour permettre une bonne adhésion du liant aux particules solides minérales.

Dans un mode de réalisation adapté aux enduits, dans la formule (I)
- R¹ et R² sont identiques et sont chacun choisis parmi les groupes ethyle, n-propyle, isopropyle, n-butyle, isobutyle, n-pentyle, isoamyle, hexyle, n-hexyle, isooctyle, 2-éthylhexyle, 2-propylhexyle, en particulier isobutyle ;
- X et Y sont avantageusement des esters, de préférence des esters de diacides (-X- = -O-(C=O)- ; et -Y- = -(C=O)-O-) ou des esters de diols (-X- = -(C=O)-O- et -Y- = -O-(C=O)-)
- R est un radical de formule -(CH₂)ᵣ-, où r est un nombre moyen compris entre 2 et 4 inclus. De préférence, R est choisi de sorte que le composé peut être un mélange de diesters d'adipate (r = 4), de diesters de glutarate (r = 3), et de diesters de succinate (r = 2).

Dans un mode de réalisation avantageux de l'invention, le composé (I) utilisé dans un enduit est le diisobutyle adipate, le diisobutyle glutarate ou le diisobutyle succinate, et leurs mélanges.

Un mélange adapté peut par exemple comprendre, en poids par rapport au poids total du mélange, un mélange de 5 à 29 % en poids de diisobutyle adipate (typiquement mesuré par Chromatographie en Phase Gazeuse), de 50 à 72% en poids de diisobutyle glutarate, et de 10 à 32 % en poids de diisobutyle succinate

On peut utiliser à titre de composé (I), le solvant commercialisé par Solvay sous la dénomination Rhodiasolv® DIB.

Dans un autre mode de réalisation avantageux de l'invention, le composé (I) utilisé dans la présente invention est choisi parmi le diéthyle adipate, le diéthyle glutarate ou le diéthyle succinate, et leurs mélanges.

Un mélange adapté peut par exemple comprendre, en poids par rapport au poids total du mélange, un mélange de 4 à 26 % en poids de diéthyle adipate (typiquement mesuré par Chromatographie en Phase Gazeuse), de 52 à 77 % en poids de diéthyle glutarate, et de 12 à 32 % en poids de diéthyle succinate.

On peut utiliser à titre de composé (I), le solvant commercialisé par Solvay sous la dénomination INNROAD® Protect.

Les particules solides minérales employées dans un enduit appartiennent avantageusement aux classes granulaires (d/D) suivantes : 4/6,3, 6,3/10, 10/14.

La teneur totale en liant hydrocarboné dans un enduit sera adaptée en fonction de la structure de l'enduit (mono- ou bi-couche, type de gravillonnage), de la nature du liant et de la dimension des granulats, en suivant par exemple les préconisations du document « Enduits superficiels d'usure - Guide technique, mai 1995 ».

Le liant hydrocarboné employé pour la fabrication d'un enduit peut être un bitume pur ou modifié par des polymères, tel que décrit précédemment.

Le liant hydrocarboné employé pour la fabrication d'un enduit peut être sous la forme de liant anhydre ou sous la forme de liant en émulsion.

Dans un mode de réalisation, le liant hydrocarboné est utilisé sous forme d'un liant anhydre lors de la fabrication de l'enduit.

Dans ce mode, le liant hydrocarboné comprend avantageusement, par rapport au poids total du liant hydrocarboné, de 3% à 18% en poids dudit composé de formule (I).

Dans ce mode de réalisation, l'enduit est avantageusement mis en œuvre à une température inférieure ou égale à 200°C, par exemple allant de 120°C à 180°C ou allant de 130°C à 160°C.

Dans un autre mode de réalisation, le liant hydrocarboné est un liant en émulsion.

Dans ce mode, le liant hydrocarboné comprend avantageusement, par rapport au poids total du liant hydrocarboné, 0,1 à 10% en poids dudit composé de formule (I), plus avantageusement 0,5 à 8% en poids, encore plus avantageusement 1 à 6% en poids.

Dans ce mode de réalisation, l'enduit est avantageusement mis en œuvre à une température inférieure ou égale à 40°C, par exemple allant de 5°C à 40°C ou allant de 15°C à 35°C.

### Bétons bitumineux à l'émulsion

Les bétons bitumineux à l'émulsion, encore appelés enrobés à l'émulsion, sont des enrobés hydrocarbonés réalisés à froid à partir de granulats et d'un liant hydrocarboné en émulsion. Les granulats peuvent être utilisés sans séchage et chauffage préalable ou subir un pré-lacquage partiel à chaud. Il peut parfois être nécessaire de réchauffer le produit après sa fabrication, lors de sa mise en œuvre.

Cette technique, dite technique "à froid", présente au niveau environnemental l'avantage important, de ne pas produire d'émissions de fumées, ce qui diminue les nuisances des travailleurs et des riverains. Les bétons bitumineux à l'émulsion sont constitués d'un mélange de particules solides minérales incluant des granulats, d'émulsion de bitume (modifié ou non), et d'additifs.

Cependant, la qualité de l'enrobage peut être médiocre, avec l'observation d'un phénomène de désenrobage : mauvaise répartition du film de bitume sur la totalité de la fraction granulaire, d'autant plus que la teneur en fluxant ou fluidifiant est élevée. Plus la fraction granulaire contient de fines, plus mauvaise sera la répartition du liant sur la fraction granulaire (principalement sur les gros éléments).

Pour remédier à ou limiter ces problèmes de perte de compactabilité et de mauvaise répartition du film de bitume sur la totalité de la fraction granulaire, l'étape de mélange des fractions granulaires et du liant, éventuellement de l'agent fluxant, peut être séquencée. Ces procédés séquencés impliquent plus d'étapes et donc sont moins économiques.

Il a été maintenant découvert que les composés de formule (I) permettent de fluxer efficacement les bétons bitumineux à l'émulsion. Les composés de formule (I) aident également au compactage. L'invention peut permettre également de s'affranchir de la mise en œuvre de procédés séquencés et/ou de réchauffage.

Le ou les composés de formule (I) est avantageusement ajouté à la composition comprenant le liant hydrocarboné selon l'une et/ou l'autre des 3 variantes décrites précédemment en pages 4 et 5, et ainsi avant et/ou pendant et/ou après mise en contact du liant et des particules solides minérales. Le ou les composés de formule (I) est introduit au plus tard avant mise en œuvre du béton bitumineux à l'émulsion, et est présent au moins pour partie dans la composition comprenant le liant et les particules solides minérales pour permettre une bonne adhésion.

Dans un mode de réalisation adapté aux bétons bitumineux, le ou les composés de formule (I) est introduit à la composition comprenant le liant en émulsion, puis ladite composition est mise en contact avec des particules solides minérales (variante 1).

Dans un autre mode de réalisation adapté aux bétons bitumineux, le ou les composés de formule (I) est introduit au moins pour partie en même temps que les particules solides minérales à la composition comprenant le liant hydrocarboné (variante 2).

Dans un autre mode de réalisation adapté aux bétons bitumineux, une partie ou la totalité du ou les composés de formule (I) est introduit à un pré-mélange à base de liant en émulsion et de particules solides minérales (variante 3). La composition qui en résulte comprend encore une quantité suffisante de composé de formule (I) pour mise en œuvre du béton bitumineux à l'émulsion.

Dans encore un autre mode de réalisation adapté aux bétons bitumineux, dans la formule (I)
- R¹ et R² sont identiques et sont chacun choisis parmi les groupes ethyle, n-propyle, isopropyle, n-butyle, isobutyle, n-pentyle, isoamyle, hexyle, n-hexyle, isooctyle, 2-éthylhexyle, 2-propylhexyle en particulier isobutyle ;
- X et Y sont avantageusement des esters, de préférence des esters de diacides (-X- = -O-(C=O)- ; et -Y- = -(C=O)-O-) ou des esters de diols (-X- = -(C=O)-O- et -Y- = -O-(C=O)-)
- R est un radical de formule -(CH₂)ᵣ-, où r est un nombre moyen compris entre 2 et 4 inclus. De préférence, R est choisi de sorte que le composé peut être un mélange de diesters d'adipate (r = 4), de diesters de glutarate (r = 3), et de diesters de succinate (r = 2).

Avantageusement, le composé (I) utilisé pour les bétons bitumineux à l'émulsion est le diisobutyle adipate, le diisobutyle glutarate ou le diisobutyle succinate, et leurs mélanges.

Un mélange adapté peut par exemple comprendre, en poids par rapport au poids total du mélange, un mélange de 5 à 29 % en poids de diisobutyle adipate (typiquement mesuré par Chromatographie en Phase Gazeuse), de 50 à 72% en poids de diisobutyle glutarate, et de 10 à 32 % en poids de diisobutyle succinate.

On peut utiliser à titre de composé (I), le solvant commercialisé par Solvay sous la dénomination Rhodiasolv® DIB.

Les composés de formule (I), en particulier choisis parmi le diéthyle adipate, le diéthyle glutarate ou le diéthyle succinate, et leurs mélanges , permettent un compactage satisfaisant du béton bitumineux à l'émulsion.

Un mélange adapté de composés de formule (I) peut par exemple comprendre, en poids par rapport au poids total du mélange, un mélange de 4 à 26 % en poids de diéthyle adipate (typiquement mesuré par Chromatographie en Phase Gazeuse), de 52 à 77 % en poids de diéthyle glutarate, et de 12 à 32 % en poids de diéthyle succinate.

On peut utiliser à titre de composé (I), le solvant commercialisé par Solvay sous la dénomination INNROAD® Protect.

Avantageusement, pour un béton bitumineux à l'émulsion, on ajoute également un composé de formule (II) du type précité.

Dans un premier mode de réalisation adapté aux bétons bitumineux à l'émulsion, dans la formule (II) :
- R¹ et R² sont identiques et sont chacun méthyle ;
- X et Y sont avantageusement des esters, de préférence des esters de diacides (-X- = -O-(C=O)- ; et -Y- = -(C=O)-O-) ou des esters de diols (-X- = -(C=O)-O- et -Y- = -O-(C=O)-)
- R est un radical de formule -(CH₂)ᵣ-, où r est un nombre moyen compris entre 2 et 4 inclus. De préférence, R est choisi de sorte que le composé peut être un mélange de diesters d'adipate (r = 4), de diesters de glutarate (r = 3), et de diesters de succinate (r = 2).

Avantageusement, le composé (II) utilisé pour les bétons bitumineux à l'émulsion est le diméthyle adipate, le diméthyle glutarate, le diméthyle succinate, et leurs mélanges.

Un mélange adapté peut par exemple comprendre, en poids par rapport au poids total du mélange, un mélange de 4 à 22% en poids de diméthyle adipate (typiquement mesuré par Chromatographie en Phase Gazeuse), de 55 à 77 % en poids de diméthyle glutarate, et de 12 à 32 % en poids de diméthyle succinate).

On peut utiliser à titre de composé (II), le solvant commercialisé par Solvay sous la dénomination Rhodiasolv® RPDE ou le solvant commercialisé par Solvay sous la dénomination INNROAD® Boost.

Dans un deuxième mode de réalisation adapté aux bétons bitumineux à l'émulsion, dans la formule (II) :
- R¹ et R² sont identiques et sont chacun méthyle ;
- X et Y sont avantageusement des esters, de préférence des esters de diacides (-X- = -O-(C=O)- ; et -Y- = -(C=O)-O-) ou des esters de diols (-X- = -(C=O)-O- et -Y- = -O-(C=O)-)
- R est choisi parmi les groupes suivants :
   ∘ le groupe R_{MG} de formule -CH(CH₃)-CH₂-CH₂-,
   ∘ le groupe R_{ES} de formule -CH(C₂H₅)-CH₂-, et
   ∘ leurs mélanges.

En particulier, on peut employer à titre de composé de formule (II) pour des bétons bitumineux à l'émulsion le produit commercialisé par la société Solvay sous la dénomination de Rhodiasolv® IRIS.

Les particules solides minérales pour des bétons bitumineux à l'émulsion comprennent avantageusement :
- des éléments inférieurs à 0,063 mm (filler ou fines)
- du sable dont les éléments sont compris entre 0,063 mm et 2 mm ;
- des gravillons, dont les éléments ont des dimensions comprises allant de 2 mm à 6, 10 ou 14 mm.

Le liant hydrocarboné employé pour la synthèse de bétons bitumineux à l'émulsion est sous la forme de liant en émulsion. La teneur totale en liant hydrocarboné dans ladite émulsion est de typiquement de 2 à 8 ppc (partie pour cent en poids), avantageusement 3 à 7 ppc, plus avantageusement 3,5 à 5,5 ppc, par rapport au poids des particules solides minérales. Cette teneur en liant correspond à la quantité de liant introduit en tant que tel (liant d'apport) plus la quantité de liant récupéré des agrégats d'enrobés faisant partie de la fraction minérale solide.

Le liant hydrocarboné dans une émulsion employée pour la confection d'un béton bitumineux à l'émulsion comprend avantageusement, par rapport au poids total du liant hydrocarboné, 1 à 25% en poids dudit composé de formule (I), plus avantageusement 2 à 15% en poids, encore plus avantageusement 2 à 10% en poids, encore plus avantageusement 3 à 10% en poids. Ces teneurs sont calculées que le composé de formule (I) soit effectivement ajouté au liant avant mise en contact avec des particules solides minérales ou qu'il soit ajouté à la composition comprenant le liant et les particules solides minérales.

Le liant hydrocarboné dans une émulsion employée pour la confection d'un béton bitumineux à l'émulsion peut éventuellement comprendre un composé de formule (II), avantageusement 0,1 à 5% en poids dudit composé de formule (II), par rapport au poids total du liant hydrocarboné. Ces teneurs sont calculées que le composé de formule (II) soit effectivement ajouté au liant avant mise en contact avec des particules solides minérales ou qu'il soit ajouté à la composition comprenant le liant et les particules solides minérales.

Les bétons bitumineux obtenus selon l'invention à l'émulsion peuvent être utilisés pour la fabrication d'enrobés stockables.

Dans ce mode de réalisation, le liant hydrocarboné comprend avantageusement, par rapport au poids total du liant hydrocarboné, 10 à 30% en poids dudit composé de formule (I), plus avantageusement 15 à 25% en poids, encore plus avantageusement 17 à 22% en poids.

### Matériaux bitumineux coulés à froid

Les matériaux bitumineux coulés à froid sont des enrobés pour couche de surface constitués de granulats non séchés enrobés à l'émulsion de bitume et coulés en place en continu au moyen d'un matériel spécifique.

Après sa mise en œuvre et rupture de l'émulsion, ce revêtement coulé à froid en très faible épaisseur (généralement de 6 à 13 mm d'épaisseur par couche) doit atteindre sa consistance définitive (montée en cohésion) très rapidement. Les deux paramètres essentiels gouvernant la formulation, la fabrication et la mise en œuvre des matériaux bitumineux coulés à froid sont :
- la maniabilité du mélange granulats/émulsion : optimisation des proportions des différents constituants (eau, additifs, formulation de l'émulsion) pour obtenir un délai de mise en œuvre suffisant et ainsi permettre le mélange des granulats avec l'émulsion dans le malaxeur.
- la cinétique de "montée en cohésion" : le matériau bitumineux coulé à froid, après l'application sur la chaussée, doit acquérir une montée en cohésion le plus rapidement possible pour l'ouverture au trafic. Pour des températures de mûrissement allant de 7 à 40 °C, un délai de 30 minutes est considéré comme pertinent pour l'homme de l'art pour répondre aux cahiers des charges les plus stricts.

On a découvert que les composés de formule (I) permettent de fluxer efficacement les matériaux bitumineux coulés à froid. En particulier, les composés de formule (I) permettent d'améliorer la cinétique de montée en cohésion du matériau bitumineux coulé à froid.

Pour un matériau bitumineux coulé à froid, les gouttelettes de bitume initialement séparées confèrent au système un caractère fluide et une mise en place aisée à l'aide des machines spécifiques pour les matériaux bitumineux coulés à froid. Le système est alors visqueux. Le temps caractéristique pendant lequel cet état perdure est appelé temps de maniabilité. Dans un second temps, les gouttelettes de bitume coalescent progressivement. Lorsque toutes les gouttelettes de bitume sont regroupées, on considère que l'émulsion a rompu (temps de rupture). Le système est alors viscoélastique. Le système tend par la suite à se contracter de façon à réduire la surface de contact entre l'eau et le bitume (temps de cohésion). Ce processus suit une cinétique qui dépendra des répulsions électrostatiques entre gouttelettes et donc de la nature du bitume et de l'émulsifiant. La cinétique de la réaction de coalescence entre les gouttelettes de bitume conditionnera la rapidité de la montée en cohésion du matériau bitumineux coulé à froid qui pourra se traduire par une sensibilité ou non du matériau aux conditions de mûrissement au jeune âge

Les composés de formule (I) permettent avantageusement de faciliter la coalescence des gouttelettes de bitume.

Dans un mode de réalisation adapté aux matériaux bitumineux coulés à froid le ou les composés de formule (I) est introduit à la composition comprenant le liant en émulsion (), puis ladite composition est mise en contact avec des particules solides minérales (variante 1).

Dans une première variante du mode de réalisation précédent, le ou les composés de formule (I) est introduit dans le liant puis le liant est mis en émulsion dans une phase continue aqueuse.

Dans une deuxième variante du mode de réalisation précédent, le ou les composés de formule (I) est introduit dans le liant déjà en émulsion

Dans un autre mode de réalisation adapté aux matériaux bitumineux coulés à froid le ou les composés de formule (I) est ajouté en même temps que les particules solides minérales à la composition comprenant le liant hydrocarboné en émulsion (variante 2). Il est possible de pré-mélanger le ou les composés de formule (I) et les particules solides minérales.

Dans un autre mode de réalisation, les deux modes de réalisations précédents sont combinés et ainsi :
- une partie du ou des composés de formule (I) est introduit à la composition comprenant le liant en émulsion, selon la première ou la deuxième variante, puis ladite composition est mise en contact avec des particules solides minérales et
- une autre partie du ou des composés de formule (I) est ajoutée en même temps que les particules solides minérales à la composition comprenant le liant hydrocarboné en émulsion et la partie déjà introduite du ou des composés de formule (I).

Dans un autre mode de réalisation adapté aux matériaux bitumineux coulés à froid, une partie ou la totalité du ou les composés de formule (I) est introduit à un pré-mélange à base de liant en émulsion et de particules solides minérales (variante 3), avant rupture de l'émulsion.

Dans un mode de réalisation adapté aux matériaux bitumineux coulés à froid, dans la formule (I)
- R¹ et R² sont identiques et sont chacun choisis parmi les groupes ethyle, n-propyle, isopropyle, n-butyle, n-pentyle, isoamyle, isobutyle, hexyle, n-hexyle, isooctyle, 2-éthylhexyle, 2-propylhexyle en particulier isobutyle ;
- X et Y sont avantageusement des esters, de préférence des esters de diacides (-X- = -O-(C=O)- ; et -Y- = -(C=O)-O-) ou des esters de diols (-X- = -(C=O)-O- et -Y- = -O-(C=O)-)
- R est un radical de formule -(CH₂)ᵣ-, où r est un nombre moyen compris entre 2 et 4 inclus. De préférence, R est choisi de sorte que le composé peut être un mélange de diesters d'adipate (r = 4), de diesters de glutarate (r = 3), et de diesters de succinate (r = 2).

Avantageusement, pour les matériaux bitumineux coulés à froid le composé (I) utilisé dans la présente invention est le diisobutyle adipate, le diisobutyle glutarate ou le diisobutyle succinate, et leurs mélanges.

Un mélange adapté peut par exemple comprendre, en poids par rapport au poids total du mélange, un mélange de 5 à 29 % en poids de diisobutyle adipate (typiquement mesuré par Chromatographie en Phase Gazeuse), de 50 à 72% en poids de diisobutyle glutarate, et de 10 à 32 % en poids de diisobutyle succinate.

On peut utiliser à titre de composé (I), le solvant commercialisé par Solvay sous la dénomination Rhodiasolv® DIB.

On a découvert, de manière surprenante, que la montée en cohésion pouvait encore être améliorée lorsque le composé (I) utilisé dans la présente invention est choisi parmi le diéthyle adipate, le diéthyle glutarate ou le diéthyle succinate, et leurs mélanges.

Un mélange adapté peut par exemple comprendre, en poids par rapport au poids total du mélange, un mélange de 4 à 26 % en poids de diéthyle adipate (typiquement mesuré par Chromatographie en Phase Gazeuse), de 52 à 77 % en poids de diéthyle glutarate, et de 12 à 32 % en poids de diéthyle succinate.

On peut utiliser à titre de composé (I), le solvant commercialisé par Solvay sous la dénomination INNROAD® Protect.

Avantageusement, pour un matériau bitumineux coulé à froid, on ajoute également un composé de formule (II).

Dans un premier mode de réalisation, dans la formule (II) :
- R¹ et R² sont identiques et sont chacun méthyle ;
- X et Y sont avantageusement des esters, de préférence des esters de diacides (-X- = -O-(C=O)- ; et -Y- = -(C=O)-O-) ou des esters de diols (-X- = -(C=O)-O- et -Y- = -O-(C=O)-)
- R est un radical de formule -(CH₂)ᵣ-, où r est un nombre moyen compris entre 2 et 4 inclus. De préférence, R est choisi de sorte que le composé peut être un mélange de diesters d'adipate (r = 4), de diesters de glutarate (r = 3), et de diesters de succinate (r = 2).

Avantageusement, le composé (II) utilisé pour les matériaux bitumineux coulés à froid est le diméthyle adipate, le diméthyle glutarate, le diméthyle succinate, et leur mélanges.

Un mélange adapté peut par exemple comprendre, en poids par rapport au poids total du mélange, un mélange de 4 à 22% en poids de diméthyle adipate (typiquement mesuré par Chromatographie en Phase Gazeuse), de 55 à 77 % en poids de diméthyle glutarate, et de 12 à 32 % en poids de diméthyle succinate.

On peut utiliser à titre de composé (II), le solvant commercialisé par Solvay sous la dénomination Rhodiasolv® RPDE ou le solvant commercialisé par Solvay sous la dénomination INNROAD® Boost.

Dans un deuxième mode de réalisation adapté aux matériaux bitumineux coulés à froid, dans la formule (II) :
- R¹ et R² sont identiques et sont chacun méthyle ;
- X et Y sont avantageusement des esters, de préférence des esters de diacides (-X- = -O-(C=O)- ; et -Y- = -(C=O)-O-) ou des esters de diols (-X- = -(C=O)-O- et -Y- = -O-(C=O)-)
- R est choisi parmi les groupes suivants :
   ∘ le groupe R_{MG} de formule -CH(CH₃)-CH₂-CH₂-,
   ∘ le groupe R_{ES} de formule -CH(C₂H₅)-CH₂-, et
   ∘ leurs mélanges.

En particulier, un composé de formule (II) adapté aux matériaux bitumineux coulés à froid est le produit commercialisé par Solvay sous la dénomination Rhodiasolv® IRIS.

Les particules solides minérales employées pour les matériaux bitumineux coulés à froid comprennent avantageusement :
- des éléments inférieurs à 0,063 mm (filler ou fines)
- du sable dont les éléments sont compris entre 0,063 mm et 2 mm ;
   ∘ des gravillons, dont les éléments ont des dimensions comprises allant de 2 mm à 6, 10 ou 14 mm.

Le liant hydrocarboné employé pour la fabrication de matériaux bitumineux coulés à froid est sous la forme de liant en émulsion.

Dans cette émulsion, la teneur en liant varie avantageusement de 50 à 75% en poids de liant, par rapport au poids total de l'émulsion, plus avantageusement de 55 à 70% en poids, encore plus avantageusement de 60 à 65% en poids.

Le liant hydrocarboné adapté aux matériaux bitumineux coulés à froid comprend avantageusement, par rapport au poids total du liant hydrocarboné, 0,1 à 6% en poids dudit composé de formule (I), plus avantageusement 0,1 à 3% en poids dudit composé de formule (I). Dans une variante, le liant hydrocarboné comprend moins de 2% en poids dudit composé de formule (I), avantageusement moins de 1,5% en poids, encore plus avantageusement 0,1 à 1% en poids dudit composé de formule (I).

Le liant hydrocarboné adapté aux matériaux bitumineux coulés à froid comprend avantageusement, par rapport au poids total du liant hydrocarboné, 0,1 à 3% en poids dudit composé de formule (II), plus avantageusement 0,1 à 1% en poids dudit composé de formule (II).

### Enrobés hydrocarbonés à chaud ou tièdes

Les enrobés hydrocarbonés à chaud sont obtenus par mélange à chaud des granulats et d'un liant. Ce liant peut être un bitume pur ou modifié (ajout par exemple de polymère(s), de fluxants d'origine pétrolière ou végétale), un liant végétal pur ou modifié ou un liant de synthèse d'origine pétrolière. Les granulats sont chauffés, en règle générale à une température supérieure à 100°C.

Les enrobés hydrocarbonés tièdes sont des enrobés mis en œuvre à des températures d'environ 30 à 50°C inférieures aux températures mises en œuvre pour des enrobés hydrocarbonés à chaud.

On a découvert que les composés de formule (I) permettent de fluxer efficacement les enrobés hydrocarbonés à chaud ou tièdes, avec une montée en cohésion satisfaisante, et une bonne mouillabilité des particules solides minérales.

Le ou les composés de formule (I) est avantageusement ajouté à la composition comprenant le liant hydrocarboné selon l'une et/ou l'autre des 3 variantes décrites précédemment en pages 4 et 5, et ainsi avant et/ou pendant et/ou après mise en contact du liant et des particules solides minérales. Le ou les composés de formule (I) est introduit au plus tard avant mise en œuvre des enrobés hydrocarbonés à chaud ou tièdes, et est présent au moins pour partie dans la composition comprenant le liant et les particules solides minérales pour permettre une bonne adhésion.

Dans un mode de réalisation adapté, le ou les composés de formule (I) est introduit à la composition comprenant le liant, puis ladite composition est mise en contact avec des particules solides minérales (variante 1).

Dans un mode de réalisation, adapté aux enrobés hydrocarbonés à chaud ou tiède, dans la formule (I)
- R¹ et R² sont identiques et sont chacun choisis parmi les groupes ethyle, n-propyle, isopropyle, n-butyle, isobutyle, n-pentyle, isoamyle, hexyle, n-hexyle, isooctyle, 2-éthylhexyle, 2-propylhexyle en particulier isobutyle ;
- X et Y sont avantageusement des esters, de préférence des esters de diacides (-X- = -O-(C=O)- ; et -Y- = -(C=O)-O-) ou des esters de diols (-X- = -(C=O)-O- et -Y- = -O-(C=O)-)
- R est un radical de formule -(CH₂)ᵣ-, où r est un nombre moyen compris entre 2 et 4 inclus. De préférence, R est choisi de sorte que le composé peut être un mélange de diesters d'adipate (r = 4), de diesters de glutarate (r = 3), et de diesters de succinate (r = 2).

Avantageusement, le composé (I) utilisé dans la présente invention est le diisobutyle adipate, le diisobutyle glutarate ou le diisobutyle succinate, et leurs mélanges.

Un mélange adapté peut par exemple comprendre, en poids par rapport au poids total du mélange, un mélange de 5 à 29 % en poids de diisobutyle adipate (typiquement mesuré par Chromatographie en Phase Gazeuse), de 50 à 72% en poids de diisobutyle glutarate, et de 10 à 32 % en poids de diisobutyle succinate.

On peut utiliser à titre de composé (I), le solvant commercialisé par Solvay sous la dénomination Rhodiasolv® DIB
Avantageusement, le composé (I) utilisé dans la présente invention est choisi parmi le diéthyle adipate, le diéthyle glutarate ou le diéthyle succinate, et leurs mélanges.

Un mélange adapté peut par exemple comprendre, en poids par rapport au poids total du mélange, un mélange de 4 à 26 % en poids de diéthyle adipate (typiquement mesuré par Chromatographie en Phase Gazeuse), de 52 à 77 % en poids de diéthyle glutarate, et de 12 à 32 % en poids de diéthyle succinate.

On peut utiliser à titre DE COMPOSE (I), LE SOLVANT COMMERCIALISE PAR SOLVAY SOUS LA DENOMINATION INNROAD® Protect

Avantageusement, pour les enrobés hydrocarbonés à chaud, on ajoute également un composé de formule (II) du type précité.

Dans un premier mode de réalisation adapté aux enrobés hydrocarbonés à chaud, dans la formule (II) :
- R¹ et R² sont identiques et sont chacun méthyle ;
- X et Y sont avantageusement des esters, de préférence des esters de diacides (-X- = -O-(C=O)- ; et -Y- = -(C=O)-O-) ou des esters de diols (-X- = -(C=O)-O- et -Y- = -O-(C=O)-)
- R est un radical de formule -(CH₂)ᵣ-, où r est un nombre moyen compris entre 2 et 4 inclus. De préférence, R est choisi de sorte que le composé peut être un mélange de diesters d'adipate (r = 4), de diesters de glutarate (r = 3), et de diesters de succinate (r = 2).

Avantageusement, le composé (II) utilisé pour les enrobés hydrocarbonés à chaud est le diméthyle adipate, le diméthyle glutarate, le diméthyle succinate, et leurs mélanges.

Un mélange adapté peut par exemple comprendre, en poids par rapport au poids total du mélange, un mélange de 4 à 22% en poids de diméthyle adipate (typiquement mesuré par Chromatographie en Phase Gazeuse), de 55 à 77 % en poids de diméthyle glutarate, et de 12 à 32 % en poids de diméthyle succinate.

On peut utiliser à titre de composé (II), le solvant commercialisé par Solvay sous la dénomination Rhodiasolv® RPDE ou le solvant commercialisé par Solvay sous la dénomination lNNROAD® Boost.

Dans un deuxième mode de réalisation adapté aux enrobés hydrocarbonés à chaud, dans la formule (II) :
- R¹ et R² sont identiques et sont chacun méthyle ;
- X et Y sont avantageusement des esters, de préférence des esters de diacides (-X- = -O-(C=O)- ; et -Y- = -(C=O)-O-) ou des esters de diols (-X- = -(C=O)-O- et -Y- = -O-(C=O)-)
- R est choisi parmi les groupes suivants :
   ∘ le groupe R_{MG} de formule -CH(CH₃)-CH₂-CH₂-,
   ∘ le groupe R_{ES} de formule -CH(C₂H₅)-CH₂-, et
   ∘ leurs mélanges.

En particulier, on peut employer à titre de composé de formule (II) pour des enrobés hydrocarbonés à chaud le produit commercialisé par la société Solvay sous la dénomination de Rhodiasolv® IRIS.

Les particules solides minérales sont telles que définies précédemment et comprennent avantageusement :
- des éléments inférieurs à 0,063 mm (filler ou fines)
- du sable dont les éléments sont compris entre 0,063 mm et 2 mm ;
   ∘ des gravillons, dont les éléments ont des dimensions comprises allant de 2 mm à 6, 10 ou 14 mm.

Le liant hydrocarboné est sous la forme anhydre.

La teneur totale en liant hydrocarboné est de 3 à 7 ppc (partie pour cent en poids), avantageusement 3,5 à 6 ppc par rapport au poids des particules solides minérales.

Cette teneur en liant correspond à la quantité de liant introduit en tant que tel (liant d'apport) plus la quantité de liant récupéré des agrégats d'enrobés faisant partie de la fraction minérale solide.

Pour les enrobés hydrocarbonés à chaud ou tiède, le liant hydrocarboné comprend avantageusement, par rapport au poids total du liant hydrocarboné, 1 à 30% en poids dudit composé de formule (I).

Pour les enrobés hydrocarbonés à chaud, le liant hydrocarboné peut également comprendre avantageusement, par rapport au poids total du liant hydrocarboné, 1 à 30% en poids dudit composé de formule (II).

La teneur en fluxant est ajustée en fonction de la durée entre la fabrication et la mise en œuvre.

Lorsque les enrobés hydrocarbonés à chaud ou tièdes sont utilisés rapidement après fabrication, par exemple pour la fabrication de couches de roulement, le liant hydrocarboné comprend avantageusement, par rapport au poids total du liant hydrocarboné, 0,1 à 6% en poids dudit composé de formule (I).

Lorsque les enrobés hydrocarbonés à chaud sont utilisés rapidement après fabrication, par exemple pour la fabrication de couches de roulement, le liant hydrocarboné peut également comprendre, par rapport au poids total du liant hydrocarboné, 0,1 à 6% en poids dudit composé de formule (II).

Ces enrobés hydrocarbonés à chaud ou tièdes peuvent être utilisés pour la fabrication d'enrobés stockables.

Dans ce mode de réalisation, le liant hydrocarboné comprend avantageusement, par rapport au poids total du liant hydrocarboné, 15à 30% en poids dudit composé de formule (I), plus avantageusement 15 à 25% en poids, encore plus avantageusement 17 à 22% en poids.

Dans ce mode de réalisation, le composé (I) est avantageusement choisi parmi le diéthyle adipate, le diéthyle glutarate ou le diéthyle succinate, et leurs mélanges.

Un mélange adapté peut par exemple comprendre, en poids par rapport au poids total du mélange, un mélange de 4 à 26 % en poids de diéthyle adipate (typiquement mesuré par Chromatographie en Phase Gazeuse), de 52 à 77 % en poids de diéthyle glutarate, et de 12 à 32 % en poids de diéthyle succinate.

On peut utiliser à titre de composé (I), le solvant commercialisé par Solvay sous la dénomination INNROAD® Protect.

Pour les enrobés hydrocarbonés à chaud, le liant hydrocarboné peut également comprendre, par rapport au poids total du liant hydrocarboné, 15 à 30% en poids dudit composé de formule (II), plus avantageusement 15 à 25% en poids, encore plus avantageusement 17 à 22% en poids.

### EXEMPLES

### Descriptif des méthodes de test :

- Stabilisation des liants fluxés :
   ∘ Liants anhydres : Il s'agit d'une méthode d'obtention d'une couche mince de liant. La stabilisation est réalisée selon la norme NF EN 13074 1,2 (avril 2011) en laissant le bitume fluxé pendant 24h à température du laboratoire puis transféré dans une étuve ventilée pendant 24h à 50°C, et enfin, 24h à 80°C afin de permettre l'évaporation du fluxant.
   ∘ Liants en émulsion : Il s'agit d'une méthode d'obtention d'une couche mince de liant. La stabilisation est réalisée selon la norme NF EN 13074 1,2 (avril 2011) en laissant l'émulsion de bitume pendant 24h à température du laboratoire puis transférée dans une étuve ventilée pendant 24h à 50°C, et enfin, 24h à 80°C afin de permettre l'évaporation de l'eau et éventuellement d'un fluxant.
- Pseudo-viscosité STV :
   ∘ Pour les liants anhydres : Il s'agit d'une méthode de mesure de la viscosité d'un bitume fluxé par détermination du temps d'écoulement du produit à 40°C ou à 50°C à travers un orifice de 10mm. La pseudo-viscosité STV est mesurée selon la norme NF EN 12846-2 (avril 2011).
   ∘ Pour les liants en émulsion : Il s'agit d'une méthode de mesure de la viscosité d'une émulsion de bitume par détermination du temps d'écoulement du produit à 40°C à travers un orifice de 2 et/ou 4mm. La pseudo-viscosité STV est mesurée selon la norme NF EN 12846-1 (avril 2011).
- Viscosité dynamique : A COMPLETER
   ∘ Liant anhydre : La viscosité dynamique d'un bitume fluxé est mesurée à environ 140°C (80°C au-dessus du point de ramollissement) à l'aide d'un viscosimètre à mobile tournant NF EN 13302 (avril 2010)
   ∘ Emulsion : La viscosité dynamique d'une émulsion de bitume est mesurée à 40°C à l'aide d'un viscosimètre à mobile tournant NF EN 13302 (avril 2010)
- Pénétrabilité : La pénétrabilité correspond à la consistance exprimée comme la profondeur, en dixième de millimètre, correspondant à la pénétration verticale d'une aiguille de référence dans un échantillon d'essai du matériau, dans des conditions prescrites de température, de charge et de durée d'application de la charge. L'essai de pénétrabilité est réalisé selon la norme NF EN 1426 (juin 2007). Dans les exemples, les mesures ont été effectuées à 25°C, pour une charge de 100 g et une durée de 5 s. La pénétrabilité peut être mesurée à partir d'un bitume fluxé, d'un liant stabilisé obtenu à partir d'un bitume fluxé ou bien d'un liant stabilisé obtenu à partir d'une émulsion de bitume.
- Température bille-anneau : Il s'agit de la température à laquelle le liant atteint une consistance précise dans les conditions de référence de l'essai. Deux disques horizontaux de bitume, moulés dans des anneaux de laiton à épaulement, sont chauffés dans un bain liquide (eau) agité avec un taux d'élévation de la température contrôlé (5°C/min, température initiale du bain de (5 ± 1) °C), alors que chacun soutient une bille d'acier. Le point de ramollissement noté doit correspondre à la moyenne des températures auxquelles les deux disques se ramollissent suffisamment pour permettre à chaque bille, enveloppée de liant bitumineux, de descendre d'une hauteur de (25,0± 0.4) mm. La mesure s'effectue selon la norme NF EN 1427 (juin 2007). La température bille-anneau peut être mesurée à partir d'un bitume fluxé, d'un liant stabilisé obtenu à partir d'un bitume fluxé ou bien d'un liant stabilisé obtenu à partir d'une émulsion de bitume.
- Point de fragilité FRAASS : Cet essai consiste à mesurer la température à laquelle apparaissent des fissures sur un film étalé sur une lame soumise à des flexions successives. Plus le point FRAASS est élevé, plus le bitume est fragile. La mesure s'effectue selon la norme NF EN 12593 (Août 2015).
- Perte de masse après stabilisation : La perte de masse après stabilisation est mesurée comme la différence de masse entre le liant déposé au début de la procédure de stabilisation et de la masse de liant effectivement mesurée après l'étape de stabilisation (norme NF EN 13074 1,2, avril 2011)
- Courbes d'évaporation (thermobalance) : Il s'agit d'une mesure de la perte de masse d'un bitume fluxé en fonction du temps à une température fixée de 85°C. L'essai est réalisé à l'aide d'une thermobalance et permet d'évaluer la cinétique d'évaporation d'un fluxant.
- Adhésivité : Il s'agit d'une méthode de détermination de l'adhésivité liant-granulats et de l'influence d'additifs sur les caractéristiques de cette adhésivité (Norme NF EN 12272-3, juillet 2003). La quantité de liant nécessaire est chauffée à la température de répandage, puis appliquée uniformément sur une plaque d'acier. L'essai est réalisé à (5±1)°C. 100 gravillons calibrés sont répartis sur le liant, puis cylindrés. La plaque ainsi préparée est retournée puis posée sur un support à trois pointes. Une bille d'acier tombe sur la plaque d'une hauteur de 500 mm, trois fois en 10 s.
- Homogénéité par tamisage : Il s'agit d'une méthode de détermination de la quantité de grosses particules de liant présentes dans les émulsions de bitume. Une masse connue d'émulsion de bitume est filtrée, soit à travers un tamis préparé à ouverture de mailles de 0,500 mm, soit à travers deux tamis préparés, l'un à ouverture de mailles de 0,500mm et l'autre à ouverture de mailles de 0,160mm. La quantité de liant retenu sur chacun des tamis est pesée après lavage et séchage. (NF EN 1429 - Août 2013)
- Stabilité au stockage par tamisage : La stabilité au stockage est déterminée par la quantité de liant (émulsion de bitume) retenu sur le tamis à ouverture de mailles de 0,500mm après une durée de stockage définie (n jours) (NF EN 1429 -Août 2013).
- Granulométrie LASER : La granulométrie laser permet de déterminer la taille moyenne des gouttelettes de bitume d'une émulsion ainsi que leur distribution. Cette méthode permet de mesurer également la surface spécifique des gouttelettes de bitume. (Méthode d'essai interne)
- Indice de rupture : L'essai consiste à déterminer par pesée la quantité de fines de référence (Sikaïsol et/ou Forshammer) à ajouter sous agitation à vitesse constante à l'émulsion de bitume pour obtenir la rupture de cette émulsion (NF EN 13075-1 - Décembre 2016)
- Décantation : Cette méthode permet l'évaluation de la tendance à la décantation d'une émulsion de bitume. L'échantillon est laissé au repos pendant un certain temps dans une éprouvette graduée bouchée, temps au bout duquel les teneurs en eau des couches supérieure et inférieure sont déterminées conformément à l'EN 1428 ou à l'EN 1431. La tendance à la décantation est calculée par différence entre les deux teneurs en eau. (NF EN 12847 - Août 2009)
- Adhésivité par un essai d'immersion dans l'eau selon la norme NF EN 13614 A - Juin 2011 : L'émulsion de bitume est mélangée soigneusement au granulat sélectionné dans des conditions spécifiées. Pour mesurer l'effet de l'eau sur l'adhésion du liant, le mélange est d'abord mûri, puis immergé dans l'eau dans des conditions spécifiées. Le pourcentage de surface de granulat couvert de liant est évalué visuellement dans des conditions spécifiées.
- La compactabilité d'un béton bitumineux à l'émulsion est déterminée par l'essai de compactage à la presse à cisaillement giratoire (NF P 98-252 - Juin 1999) : Le compactage est obtenu par pétrissage sous une faible compression statique d'un cylindre de mélange hydrocarboné contenu dans un moule limité par des pastilles et maintenu à une température fixée. Le compactage est obtenu par la combinaison d'un cisaillement giratoire et d'une force résultante axiale appliquée par une tête mécanique. Cette méthode permet de déterminer l'évolution du pourcentage de vides de l'éprouvette en fonction du nombre de girations.
- Module BBE (NF EN 12697-26 Annexe C- Juin 2012): Préalablement à la mesure du module de rigidité, des éprouvettes de béton bitumineux à l'émulsion sont préparées par compactage à la presse à une valeur de teneur en vides équivalente à la teneur en vides mesurée selon l'essai Duriez modalité 2 en retirant 2%. Les éprouvettes subissent ensuite un mûrissement à 35°C et 20% d'hygrométrie pendant 14 jours. Le module de rigidité est ensuite mesuré à 14 jours par traction indirecte sur éprouvettes cylindriques conditionnées à 10°C (IT-CY). Le temps de montée, mesuré à partir du début de l'impulsion de chargement et qui est le temps nécessaire à l'application de la charge pour passer du chargement inital de contact à la valeur maximale, doit être de 124 ± 4 ms.
- Maniabilité BBE : Cet essai réalisé 4 heures après la fabrication du BBE avec un maniabilimètre NYNAS. Il consiste à mesurer la force nécessaire à un bras mobile pour déplacer à vitesse constante environ 10kg d'enrobé contenu dans un moule prévu à cet effet. La maniabilité de l'enrobé est suffisante si la force est inférieure à environ 200 Newton.

### Descriptif des composés testés :

Les composés suivants ont été testés :
- Composés de formule (I) :
   1. Rhodiasolv® DIB. Ce composé est dénommé « **DIB »** dans les tableaux qui suivent.
   2. INNROAD® protect. Ce composé est dénommé « **INNROAD® Protect** » dans les tableaux qui suivent.
   3. DIP tel que défini par la description, désigné « **DIP** » dans les tableaux qui suivent.
   4. DIA tel que défini par la description, désigné par « **DIA** » dans les tableaux qui suivent.
- Composés de formule (II) :
   1. Rhodiasolv® RPDE. Ce composé est dénommé « **RPDE** » dans les tableaux qui suivent.
   2. Rhodiasolv® IRIS. Ce composé est dénommé « **IRIS** » dans les tableaux qui suivent.

Les propriétés physico-chimiques de ces composés sont reportées dans le tableau suivant :

**Tableau 1**

| | Mw (g/mol) | Tension de vapeur (Pa) | Point éclair en vase clos (°C) | Densité à 20°C (g/cm³) | Intervalle d'ébullition (°C) |
|---|---|---|---|---|---|
| RPDE | 159 | 9.4 | 99 | 1.0915 | 195 - 216 |
| IRIS | 174 | 6.3 | 98 | 1.055 | 215 |
| DIB | 244 | 0.4 | 134 | 0.959 | 250 - 285 |
| INNROAD® Protect | 188 | - | 122 | 1.025 | 210 - 260 |
| DIP | 216 | | | | |
| DIA | 272 | | | | |

### Descriptif des figures :

Figure 1 : pourcentage massique de perte du composé volatil (Rhodiasolv® RPDE (trait continu), Rhodiasolv® DIB (trait pointillés), INNROAD® Protect (alternance pointillés - tiret) et Greenflux® SD (trait discontinu - tirets)) en fonction du temps à 85°C dans le liant de l'exemple 1
Figure 2 : pourcentage massique de perte du composé volatil (Rhodiasolv® RPDE (trait continu), Rhodiasolv® DIB (trait pointillés) et Greenflux® SD (trait discontinu - tirets)) en fonction du temps à 85°C dans le liant de l'exemple 2
Figure 3 : pourcentage massique de perte du composé volatil (Rhodiasolv® DIB (trait pointillés) et Rhodiasolv® IRIS (trait discontinu - tirets / points)) en fonction du temps à 85°C dans le liant de l'exemple 3

### Exemple 1 : liants fluxés pour enduits superficiels

On prépare les liants suivants :

**Tableau 2**

| | | T0 | C1 | C2 | L1 | L2 | L3 | L4 |
|---|---|---|---|---|---|---|---|---|
| bitume | Fournisseur | ESSO | | | | | | |
| | Grade | 70/100 | | | | | | |
| fluxant | Nom | - | Pétrolier (1) | RPDE | DIB | INNROAD ® Protect | DIP | DIA |
| | Teneur (% en poids par rapport au poids du liant) | 0 | 6,2 | 4,5 | 6,2 | 5 | 6 | 6,5 |
| Dope d'adhésio n | Nom | - | Impact 9000 (2) | | | | | |
| | Teneur (% en poids par rapport au poids du liant) | 0 | 0,3 | 0,3 | 0,3 | 0,3 | 0,3 | 0,3 |

| | | | | | | | | |
|---|---|---|---|---|---|---|---|---|
| (1) Greenflux® SD commercialisé par TOTAL (2) amides gras de tallol, N-[(diméthylamino)-3propyl] commercialisés par INGEVITY | | | | | | | | |

Le liant T0 est un liant non fluxé, qui sert de témoin permettant de comparer les performances du liant selon l'invention au liant sans ajout de composé selon l'invention. Les liants C1 et C2 sont des liants fluxés, qui servent d'exemples comparatifs. Les liants L1 et L2, L3, et L4 sont des liants selon l'invention.

Les propriétés des liants avant / après stabilisation et les résultats d'adhésivité des liants aux granulats sont reportés dans le tableau suivant :

**Tableau 3**

| | T0 | C1 | C2 | L1 | L2 | L3 | **L4** |
|---|---|---|---|---|---|---|---|
| | Avant stabilisation | | | | | | |
| Pseudo-viscosité STV 40°C, 10mm, s | - | 440 | 484 | 459 | 468 | 483 | 502 |
| Pénétrabilité à 25°C, 1/10 mm | 78 | - | - | - | | - | - |
| Temperature Bille-Anneau, °C | 46,2 | - | - | - | | - | - |

| | Après stabilisation | | | | | | |
|---|---|---|---|---|---|---|---|
| Perte de masse après stabilisation | - | 3,0% | 3,9% | 4,9% | 4.4% | - | - |
| Pénétrabilité à 25°C, 1/10 mm | - | 124 | 62 | 92 | 66 | - | - |
| Temperature Bille-Anneau, °C | - | 43,0 | 51,0 | 45,4 | 47,6 | - | - |
| Adhésivité à la plaque Vialit 5°C + viadop PX10051 40 g/m² | | | | | | | |
| Granulats 6/10 La meilleraie - lavés secs | | | | | | | |
| Tombé non taché | - | 7 | 8 | 5 | 0 | - | - |
| Tombé taché | - | 39 | 90 | 42 | 50 | - | - |
| Collé à la plaque | - | 54 | 2 | 53 | 50 | - | - |

La stabilisation des bitumes fluxés est réalisée selon le protocole décrit dans la norme NF EN 13074 1,2 (avril 2011). Tous les essais sont conduits selon les protocoles décrits dans les normes citées en références et explicités plus haut.
On constate que les liants selon l'invention permettent d'obtenir des résultats satisfaisants en termes d'adhésivité et de fluxage (vu au travers de la viscosité).
En outre, les liants selon l'invention retrouvent leurs propriétés avant fluxage, vues au travers de la pénétrabilité et de la température bille-anneau.

Ces résultats montrent que les liants selon l'invention permettent d'obtenir des enduits superficiels durs au temps court, ce qui permet une remise sous trafic rapide.
A titre de comparaison, il est à noter que le Rhodiasolv® RPDE qui ne répond pas à la formule (I), bien qu'il s'agisse d'un composé volatil, ne permet pas d'obtenir une adhésivité convenable. En effet, seuls 2% des granulats restent collés à la plaque. Le liant C2 n'a pas une consistance lui permettant de mouiller correctement les granulats.

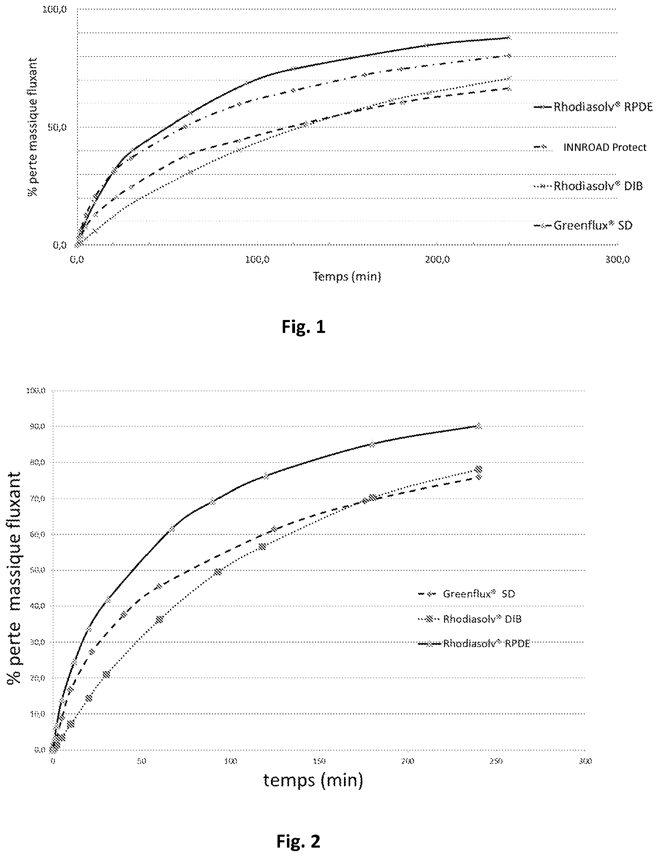

Les courbes d'évaporation (perte massique de fluxant en fonction du temps) pour les liants C 1, C2, L1 et L2 sans stabilisation sont reproduites sur la figure 1. On constate que les cinétiques d'évaporation des liants C1 et L1 sont similaires alors que dans le liant C2, le fluxant s'est évaporé très rapidement. Le liant L2 a un profil d'évaporation intermédiaire entre ceux des liants C1 et C2.

### Exemple 2 : liants-polymères fluxés pour enduits superficiels

On prépare les liants suivants :

**Tableau 4**

| | | C3 | C4 | L5 |
|---|---|---|---|---|
| Bitume polymère | Fournisseur | Eurovia (1) | | |
| | Grade | bitume 50/70 comprenant 3% en poids, par rapport au poids total, de polymère SBS linéaire, réticulé par du soufre | | |
| fluxant | Nom | Pétrolier (2) | RPDE | DIB |
| | Teneur (% en poids par rapport au poids du liant) | 15,0 | 12,0 | 13,5 |
| Dope d'adhésion | Nom | Impact 9000 (3) | | |
| | Teneur (% en poids par rapport au poids du liant) | 0,3 | 0,3 | 0,3 |

| | | | | |
|---|---|---|---|---|
| (1) ce liant présente une cohésion supérieure ou égale à 1,3 J/cm² telle que mesurée selon la norme NF EN 13588 de juillet 2008 après stabilisation selon les normes NF EN 13074-1 et 13074-2 (2) Greenflux® SD commercialisé par TOTAL (3) amides gras de tallol, N-[(diméthylamino)-3propyl] commercialisés par INGEVITY | | | | |

Les liants C3 et C4 sont des liants-polymère fluxés, qui servent d'exemples comparatifs. Le liant L5 est un liant selon l'invention.

Les propriétés des liants avant / après stabilisations sont reportés dans le tableau suivant :

**Tableau 5**

| | C3 | C4 | L6 | Spécifications (EN 15332, août 2013) |
|---|---|---|---|---|
| | Avant stabilisation | | | |
| Pseudo-viscosité STV 50°C, 10mm,s | 83 | 82 | 84 | |

| | Après stabilisation | | | |
|---|---|---|---|---|
| Perte de masse après stabilisation | 11,0% | 11,1% | 10,2% | |
| Pénétrabilité à 25°C, 1/10 mm | 114 | 46 | 119 | ≤ 120 |
| Temperature Bille-Anneau, °C | 51,2 | 60,8 | 49,5 | ≥ 49 |
| Point de fragilité FRAASS, °C | - | - | -18 | ≤ -15 |

La stabilisation des bitumes fluxés est réalisée selon le protocole décrit dans la norme NF EN 13074 1,2 (avril 2011). Tous les essais sont conduits selon les protocoles décrits dans les normes citées en références et explicités plus haut.
On constate que même pour les liants fortement modifiés, l'évaporation du fluxant est convenable et permet d'aboutir à des liants stabilisés répondant aux spécifications selon la norme EN 15322 d'août 2013.
Les courbes d'évaporation (perte massique de fluxant en fonction du temps) pour les liants C 3, C4 et L3 sans stabilisation sont reproduites sur la figure 2. On constate que les cinétiques d'évaporation des liants C3 et L3 sont similaires alors que dans le liant C4, le fluxant s'est évaporé très rapidement.

### Exemple 3 : liants-polymères fluxés pour enduits superficiels

On prépare les liants suivants :

**Tableau 6**

| | | C5 | L6 |
|---|---|---|---|
| bitume | Fournisseur | Eurovia (1) | |
| | Grade | bitume 70/100 comprenant 3% en poids, par rapport au poids total, de polymère SBS linéaire, réticulé par du soufre | |
| fluxant | Nom | IRIS | DIB |
| | Teneur (% en poids par rapport au poids du liant) | 7,0 | 8,02 |
| Dope d'adhésion | Nom | Impact 9000 (1) | |
| | Teneur (% en poids par rapport au poids du liant) | 0,3 | 0,3 |

| | | | |
|---|---|---|---|
| (1) ce liant présente une cohésion supérieure ou égale à 1 J/cm² telle que mesurée selon la norme NF EN 13588 de juillet 2008 après stabilisation selon les normes NF EN 13074-1 et 13074-2 (2) amides gras de tallol, N-[(diméthylamino)-3propyl] commercialisés par INGEVITY | | | |

Le liant C5 est un liant-polymère fluxé, qui sert d'exemple comparatif. Le liant L6 est un liant selon l'invention.

Les propriétés des liants avant / après stabilisations et les résultats d'adhésivité des liants aux granulats sont reportés dans le tableau suivant :

**Tableau 7**

| | C5 | L6 | Spécifications EN 15322, août 2013 |
|---|---|---|---|
| | Avant stabilisation | | |
| Pseudo-viscosité STV 40°C, 10mm, s | 379 | 367 | 250 - 500 |

| | Après stabilisation | | |
|---|---|---|---|
| Perte de masse après stabilisation | 5,8% | 5,9% | |
| Pénétrabilité à 25°C, 1/10 mm | 62 | 84 | ≤ 150 |
| Temperature Bille-Anneau, °C | 50,4 | 48,4 | ≥ 43 |
| Point de fragilité FRAASS, °C | -13 | -15 | ≤ - 14 (spécifications propres) |
| Adhésivité à la plaque Vialit 5°C + viadop PX10051 40 g/m² | | | |
| Granulats 6/10 ESCHAU - lavés secs | | | |
| Tombé non taché | 63 | 11 | |
| Tombé taché | 37 | 20 | |
| Collé à la plaque | 0 | 69 | |

La stabilisation des bitumes fluxés est réalisée selon le protocole décrit dans la norme NF EN 13074 1,2 (avril 2011). Tous les essais sont conduits selon les protocoles décrits dans les normes citées en références et explicités plus haut.

On constate que le liant selon l'invention permet d'obtenir des résultats satisfaisants en termes d'adhésivité et de fluxage (vu au travers de la viscosité). En outre, le liant selon l'invention présente des propriétés de pénétrabilité, de température bille-anneau et de point de fragilité FRAASS conformes aux spécifications. Ces résultats montrent que le liant modifié selon l'invention permet d'obtenir des enduits superficiels durs au temps court, ce qui permet une remise sous trafic rapide.

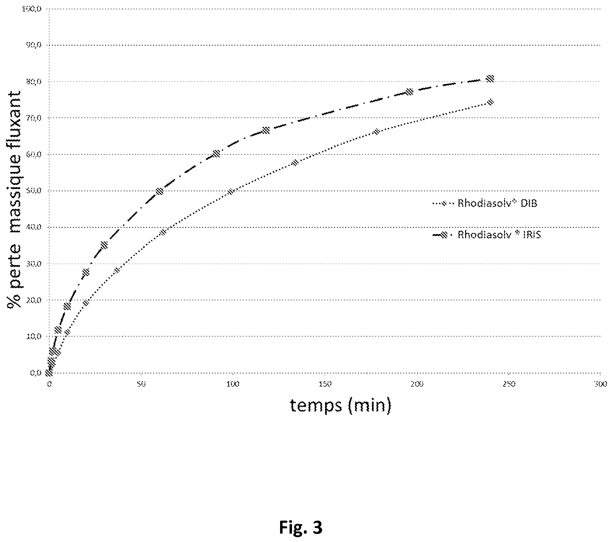

A titre de comparaison, il est à noter que le Rhodiasolv® IRIS qui ne répond pas à la formule (I), bien qu'il s'agisse d'un composé volatil, ne permet pas d'obtenir une adhésivité convenable. En effet, aucun granulat ne reste collé à la plaque et 63% des granulats retombent non tâchés. Le liant C5 n'a pas une consistance lui permettant de mouiller correctement les granulats. Cependant, si on compare les courbes d'évaporation pour C5 et L6, les composés IRIS et DIB ont des comportements proches (figure 3). Ces résultats montrent que la courbe d'évaporation des composés dans le bitume n'est pas le seul paramètre qui permet de choisir un fluxant permettant d'atteindre les objectifs de l'invention.

### Exemple 4 : liants-polymères fluxés en émulsion pour enduits superficiels

On prépare les liants suivants :

**Tableau 8**

| | | C6 | L7 | L8 |
|---|---|---|---|---|
| Bitume polymère | Fournisseur | Eurovia (1) | | |
| | Grade | bitume 70/100 comprenant 2,6% en poids, par rapport au poids total, de polymère SBS linéaire, réticulé par du soufre | | |
| fluxant | Nom | Pétrolier (2) | DIB | Innroad® Protect |
| | Teneur (% en poids par rapport au poids du liant) | 5,4 | 5,4 | 5,4 |

| | | | | |
|---|---|---|---|---|
| (1) ce liant présente une cohésion supérieure ou égale à 1,3 J/cm² telle que mesurée selon la norme NF EN 13588 de juillet 2008 après stabilisation selon les normes NF EN 13074-1 et 13074-2 (2) Greenflux® SD commercialisé par TOTAL | | | | |

Le liant C5 est un liant-polymère fluxé, qui sert d'exemple comparatif. Les liants L7 et L8 sont des liants selon l'invention.

Les propriétés des liants avant stabilisation sont reportées dans le tableau suivant :

**Tableau 9**

| | C6 | L7 | L8 |
|---|---|---|---|
| viscosité dynamiqe en mPa.s (NF EN 13302) | | | |
| 100°C | 2023 | 1962 | 1470 |
| 120°C | 641 | 635 | 500 |
| 140°C | 271 | 219 | 49,5 |
| 160°C | 135 | 132 | 117 |

Les liants L7 et L8 ont une viscosité comparable à celle du liant de référence, C6.

Ces liants C6, L7 et L8 ont été émulsionnés en suivant le même procédé d'émulsification, avec le même tensioactif (HCl/amine). On fabrique des émulsions cationiques.
Les propriétés des émulsions de liant sont reportées dans le tableau suivant :

**Tableau 10**

| | Emulsion à base de C6 | Emulsion à base de L8 | Emulsion à base de L9 |
|---|---|---|---|
| Pseudo-viscosité (NF EN 12846-1) | | | |
| STV 40°C, 4mm, s | 13 | 11 | 12 |
| STV 40°C, 2mm, s | 160 | 117 | 134 |

| Homogénéité par tamisage (NF EN 1429) | | | |
|---|---|---|---|
| Refus à 0,500 mm | 0,04 | 0,03 | 0,02 |
| Refus à 0,160 mm | 0,28 | 0,19 | 0,18 |

| Stabilité au stockage par tamisage (NF EN 1429) | | | |
|---|---|---|---|
| N (jours) | 7 | 7 | 7 |

| Granulométrie LASER (Malvern) : MEI | | | |
|---|---|---|---|
| Diamètre médian (µm) | 2,98 | 2,86 | 2,70 |

| Viscosité dynamique (NF EN 13302) | | | |
|---|---|---|---|
| A 40°C (mPa.s) | 2 s⁻¹ 6,0% 300 mPa.s 20,4 s⁻¹ 45,4% 226 mPa.s | 2 s⁻¹ 4,4% 220 mPa.s 20,4 s⁻¹ 34,3% 171 mPa.s | 2 s⁻¹ 5,1% 255 mPa.s 20,4 s⁻¹ 38,9% 194 mPa.s 34 s⁻¹ 60,1% 180 mPa.s |
| | 34 s⁻¹ 69,7% 210 mPa.s | 34 s⁻¹ 53,2% 160 mPa.s | |

| Indice de rupture (NF EN 13075-1) | | | |
|---|---|---|---|
| Sikaïsol | 47 | 34 | 51 |
| Forshammer | 66 | 48 | 71 |

| Décantation (NF EN 12847) | | | |
|---|---|---|---|
| 7 jours, 25°C | 0,4 | 1,1 | 0,6 |

Les propriétés des émulsions sont conformes aux spécifications attendues. Les propriétés des émulsions avec les liants L7 et L8 sont comparables à celles observées pour l'émulsion avec le liant C6.

Pour chacune de ces émulsions, on a déterminé l'adhésivité par un essai d'immersion dans l'eau selon la norme NF EN 13614 (Juin 2011) avec des granulats 6/10 DUSSAC (200 g lavés et séchés). Les résultats sont reportés dans le tableau suivant :

**Tableau 11**

| | Emulsion à base de C6 | Emulsion à base de L7 | Emulsion à base de L8 |
|---|---|---|---|
| Granulat | 6/10 DUSSAC lavé/séché | | |
| Nature minéralogique | Diorite | | |
| Ratio massique granulat / liant résiduel | 200/10 | 200/10 | 200/10 |
| Enrobage | Bon | Bon | Bon |
| Note (% recouvrement) | 90 | 90 | 90 |

Un enrobage satisfaisant (90% de surface recouverte après immersion dans l'eau) a été obtenu avec 10g de liant résiduel pour chacune des émulsions.

Les émulsions ont été stabilisées selon le protocole décrit en introduction. Les résultats sont reportés dans le tableau suivant :

**Tableau 12**

| | Emulsion à base de C6 | Emulsion à base de L7 | Emulsion à base de L8 | Spécifications |
|---|---|---|---|---|
| Pénétrabilité à 25°C (1/10 mm) | 58 | 64 | 41 | < 100 |
| Température bille-anneau (°C) | 56,8 | 55,2 | 59,8 | ≥ 50 |

Les propriétés des émulsions stabilisées témoignent d'une évaporation légèrement plus lente du DIB par rapport au fluxant pétrolier et d'une évaporation plus rapide du Innroad® Protect par rapport au fluxant pétrolier. On note la présence de DIB résiduel dans le liant L7.

### Exemple 5 : bétons bitumineux à l'émulsion

On prépare des bétons bitumineux à l'émulsion suivant les formules suivantes :

**Tableau 13**

| | BBE I1 | BBE I2 | BBE I3 | BBE C1 | BBE C2 | BBE C3 |
|---|---|---|---|---|---|---|
| Fraction | Granulats 0/4 Uzerche | | | | | |
| minérale | 4/6,3 Pagnac | | | | | |
| solide | 6/10 Pagnac pré-laqués à 1.8ppc d'émulsion | | | | | |
| Emulsion d'apport | 7,1ppc | | | | | |
| Fluxant - teneur | 0,3 ppc | | | | | 0 |
| Fluxant - nature | DIB | Mélange 80/20 en poids DIB/RPDE | Innroad® Protect | Oléoflux® | Greenflux® SD | - |
| Teneur en liant anhydre résiduel théorique | 5,0 ppc | 5,0 ppc | 5,0 ppc | 5,3 ppc | 5,0 ppc | 5,0 ppc |

« ppc » signifie « parties pour cent en poids » par rapport au poids de la fraction minérale solide. L'émulsion de pré-lacquage ou d'apport est dans les deux cas une émulsion cationique. Dans les deux cas on utilise des émulsions de bitume comprenant comme liant un bitume 70/100. Dans les deux cas on utilise des émulsions de bitume ayant une teneur en liant de 65% en poids, par rapport au poids total de l'émulsion.
Le fluxant est introduit par pulvérisation en fin de malaxage.

**Tableau 14**

| | BBE I4 | BBE I5 | BBE C4 | BBE C5 | BBE C6 |
|---|---|---|---|---|---|
| Fraction minérale solide | 0/2 Dussac + 2/6 Dussac + 6/10 Dussac | | | | |
| Emulsion d'apport | 7.7ppc | | | | |
| Fluxant-teneur | 0,3 ppc | | | | 0 |
| Fluxant - nature | DIB | INNROAD® Protect | Oléoflux® | Greenflux® SD | - |
| Teneur en liant anhydre résiduel théorique | 5,0 ppc | 5,0 ppc | 5,3 ppc | 5,0 ppc | 5,0ppc |

« ppc » signifie « parties pour cent en poids » par rapport au poids de la fraction minérale solide. L'émulsion de pré-lacquage ou d'apport est dans les deux cas une émulsion cationique. Dans les deux cas on utilise des émulsions de bitume comprenant comme liant un bitume 70/100. Dans les deux cas on utilise des émulsions de bitume ayant une teneur en liant de 65% en poids, par rapport au poids total de l'émulsion.
Le fluxant est introduit par pulvérisation en fin de malaxage.

Pour les formules Uzerche-Pagnac, on évalue la compactabilité (PCG), le module et la maniabilité de ces bétons bitumineux à l'émulsion. Les résultats pour les formules Uzerche-Pagnac sont donnés dans les tableaux suivants :

**Tableau 15**

| | **PCG** | | | | | | | | | | | | | |
|---|---|---|---|---|---|---|---|---|---|---|---|---|---|---|
| | **% de vides en fonction du nombre de girations** | | | | | | | | | | | | | |
| | **5** | **10** | **15** | **20** | **25** | **30** | **40** | **50** | **60** | **80** | **100** | **120** | **150** | **200** |
| BBE I1 | 23,3 | 20,0 | 18,2 | 17,0 | 16,1 | 15,3 | 14,2 | 13,4 | 12,7 | 11,7 | 10,9 | 10,3 | 9,5 | 8,6 |
| BBE I2 | 24,9 | 21,7 | 19,9 | 18,7 | 17,8 | 17 | 16 | 15,1 | 14,4 | 13,4 | 12,6 | 12 | 11,2 | 10,3 |
| BBE I3 | 23,9 | 20,7 | 19 | 17,8 | 16,8 | 16,1 | 15 | 14,1 | 13,4 | 12,4 | 11,6 | 11 | 10,3 | 9,4 |
| BBE C1 | 23,7 | 20,5 | 18,6 | 17,4 | 16,5 | 15,8 | 14,6 | 13,7 | 13,0 | 12,0 | 11,2 | 10,6 | 9,8 | 8,8 |
| BBE C2 | 24,1 | 21,2 | 19,1 | 17,9 | 17 | 16,3 | 15,2 | 14,3 | 13,7 | 12,6 | 11,9 | 11,3 | 10,6 | 9,7 |
| BBE C3 | 27,1 | 23,8 | 21,9 | 20,7 | 19,8 | 19,1 | 18 | 17,1 | 16,5 | 15,5 | 14,7 | 14,1 | 13,4 | 12,5 |

Les résultats de compactabilité démontrent la capacité du composé (I), seul ou en combinaison avec les composés (II), à améliorer le compactage du béton bitumineux à l'émulsion et à réduire la teneur en vide par rapport à une même formule sans fluxant (BBE C3).

**Tableau 16**

| | **Evolution du Module (MPa)** | | | | |
|---|---|---|---|---|---|
| | **10°C 124ms conservation 35°C 20%HR** | | | | |
| | **3 jours** | **7 jours** | **14 jours** | **21 jours** | **% vides (banc gamma)** |
| BBE I1 | 1039 | 1375 | 1402 | 1533 | 15 ± 1 |
| BBE I2 | 1078 | 1337 | 1341 | 1554 | 15 ± 1 |
| BBE I3 | 1185 | 1378 | | 2179 | 15 ± 1 |
| BBE C1 | 252 | 455 | 491 | 578 | 15 ±1 |
| BBE C2 | 820 | 1109 | 1313 | 1463 | 15 ± 1 |

Le composé (I), seul ou en combinaison avec les composé (II), permet une bonne remontée en consistance du béton bitumineux à l'émulsion par rapport notamment à la formule référence BBE C1. On note en particulier que le INNROAD® Protect donne les meilleurs résultats.

**Tableau 17**

| | **Maniabilité (N) à 4 heures** |
|---|---|
| **BBE I1** | 332 |
| **BBE I2** | 247 |
| **BBE I3** | 336 |
| **BBE C1** | 272 |
| **BBE C2** | 233 |
| **BBE C3** | 187 |

Le composé (I), seul ou en combinaison avec les composé (II), permet de maintenir une valeur acceptable de maniabilité

Pour les formules Dussac, on évalue la compactabilité (PCG) et la maniabilité de ces bétons bitumineux à l'émulsion.

Les résultats pour les formules Dussac sont donnés dans les tableaux suivants :

**Tableau 18**

| | **PCG** | | | | | | | | | | | | | |
|---|---|---|---|---|---|---|---|---|---|---|---|---|---|---|
| | **% de vides en fonction du nombre de girations** | | | | | | | | | | | | | |
| | **5** | **10** | **15** | **20** | **25** | **30** | **40** | **50** | **60** | **80** | **100** | **120** | **150** | **200** |
| BBE I4 | 27, 0 | 24, 0 | 22, 4 | 21, 2 | 20, 4 | 19, 7 | 18, 7 | 18, 0 | 17, 4 | 16, 6 | 15, 9 | 15, 4 | 14, 8 | 14, 1 |
| BBE I5 | 26, 3 | 23, 2 | 21, 5 | 20, 4 | 19, 5 | 18, 8 | 17, 8 | 17, 1 | 16, 5 | 15, 6 | 15, 0 | 14, 5 | 13, 9 | 13, 2 |
| BBE C4 | 25, 9 | 22, 8 | 21, 1 | 20, 0 | 19, 1 | 18, 4 | 17, 5 | 16, 7 | 16, 1 | 15, 3 | 14, 6 | 14, 1 | 13, 6 | 12, 9 |
| BBE C5 | 26, 3 | 23, 5 | 21, 8 | 20, 8 | 19, 9 | 19, 3 | 18, 4 | 17, 7 | 17, 1 | 16, 3 | 15, 7 | 15, 2 | 14, 6 | 14, 0 |
| BBE C6 | 27, 6 | 24, 7 | 23, 1 | 21, 9 | 21, 1 | 20, 5 | 19, 4 | 18, 7 | 18, 1 | 17, 3 | 16, 6 | 16, 1 | 15, 5 | 14, 8 |

Les résultats de compactabilité démontrent la capacité du composé (I) à améliorer le compactage du béton bitumineux à l'émulsion et à réduire la teneur en vide par rapport à une même formule sans fluxant (BBE C6).

**Tableau 19**

| | **Maniabilité (N) à 4 heures** |
|---|---|
| BBE I4 | 344 |
| BBE I5 | 175 |
| BBE C4 | 241 |
| BBE C5 | 406 |
| BBE C6 | 641 |

Le composé (I) permet d'améliorer la maniabilité des bétons bitumineux à l'émulsion par rapport aux solutions de référence.

### Exemple 6 : Matériaux bitumineux coulés à froid (MBCF)

Lorsqu'un grade de bitume 50/70 est employé pour la formulation de MBCF, il convient de fluxer légèrement le bitume en début et en arrière-saison afin de faciliter la remontée en cohésion du MBCF aux faibles températures. Le tableau ci-dessous montre les variations de pénétrabilité et de température bille-anneau en fonction de la concentration en fluxant :

**Tableau 20**

| | Bitume 50/70 | Bitume 70/100 | 99,5% 50/70 + 0,5% INNROAD® protect | 99,2% 50/70 + 0,8% INNROAD® protect | 99% 50/70 + 1% INNROAD® protect | 99% 50/70 + 1% Greenflux SD | 98,5% 50/70 + 1,5% Greenflux SD |
|---|---|---|---|---|---|---|---|
| Pénétrabilité à 25°C en 1/10 mm NF EN 1426 | 52 | 80 | 66 | 76 | 83 | 73 | 86 |
| Température Bille-Anneau NF EN 1427 | 50,0 | 45,6 | 48,4 | 47,6 | 46,6 | 47,6 | 46,0 |

Les pourcentages sont des pourcentages massiques.
Le composé (I) permet de garantir un changement de grade du bitume à une concentration plus faible que le fluxant de référence.

## Revendications

1. Utilisation à titre d'agent fluxant, d'au moins un composé répondant à la formule (I)
R¹-X-R-Y-R² (I)
où :
R¹ et R², identiques ou différents, sont des chaînes hydrocarbonées, linéaires ou ramifiées, en C₂-C₁₁ ;
chacun de -X- et -Y-, identiques ou différents, est un groupe -O-(C=O)- ; -(C=O)-O- ; -NR'-(C=O)- avec R' représentant un atome d'hydrogène ou un radical alkyle en C₁-C₄, ou -(C=O)-NR'- avec R' représentant un atome d'hydrogène ou un radical alkyle en C₁-C₄,
le groupe -R- est une chaîne hydrocarbonée divalente, en C₁-C₁₀, linéaire ou ramifiée, et éventuellement interrompue par un ou plusieurs atomes d'oxygène
dans une composition comprenant un liant hydrocarboné pour la préparation d'un produit bitumeux à base de particules solides minérales en contact avec ledit liant hydrocarboné,
où ledit composé de formule (I) est présent dans ladite composition lors de la mise en contact de ladite composition avec lesdites particules solides minérales.

2. Utilisation selon la revendication 1, **caractérisée en ce que** le composé de formule (I) est ajouté à la composition comprenant le liant hydrocarboné selon l'une et/ou l'autre des 3 variantes compatibles suivantes :
i. variante 1 : le composé de formule (I) est ajouté au moins pour partie (si la variante 2 et/ou la 3 est également mise en œuvre), voire en totalité (sinon), à la composition comprenant le liant hydrocarboné, puis la composition comprenant le composé de formule (I) est mise en contact avec les particules solides minérales avant évaporation complète du composé de formule (I) hors de la composition,(en d'autres termes, ledit composé de formule (I) est encore présent au moins pour partie dans la composition lors de la mise en contact avec les particules solides minérales, de préférence en une quantité suffisante dans la composition pour y assurer un rôle de fluxant) ;
et/ou
ii. variante 2 : le composé de formule (I) est ajouté au moins pour partie (si la variante 1 et/ou la 3 est également mise en œuvre), voire en totalité (sinon), en même temps que les particules solides minérales à la composition comprenant le liant hydrocarboné ;
et/ou
iii. variante 3 : le composé de formule (I) est ajouté au moins pour partie (si la variante 1 et/ou la 2 est également mise en œuvre), voire en totalité (sinon), à un pré-mélange contenant les particules solides minérales et la composition comprenant le liant hydrocarboné.

3. Utilisation selon la revendication 1 ou 2, **caractérisée en ce que** la composition comprend en outre un composé répondant à la formule (II)
R¹-X-R-Y-R² (II)
où :
R¹ et R², identiques ou différents, sont des chaînes hydrocarbonées, linéaires ou ramifiées, en C₁-C₁₁; et où au moins un de R¹, R² est un radical méthyle -X- et -Y-, -R- sont tels que définis pour la formule (I) dans la revendication 1.

4. Utilisation selon l'une quelconque des revendications précédentes, **caractérisée en ce que** le produit bitumineux est un enduit superficiel.

5. Utilisation selon la revendication 4, **caractérisée en ce que** dans la formule (I) :
- R¹ et R² sont identiques et sont chacun choisis parmi les groupes éthyle, n-propyle, isopropyle, n-butyle, isobutyle, n-pentyle, isoamyle, hexyle, n-hexyle, isooctyle, 2-éthylhexyle, 2-propylhexyle ;
- X et Y sont avantageusement des esters, de préférence des esters de diacides (-X-= -O-(C=O)- ; et -Y- = -(C=O)-O-) ou des esters de diols (-X- = -(C=O)-O- et -Y- = -O-(C=O)-)
- R est un radical de formule -(CH₂)ᵣ-, où r est un nombre moyen compris entre 2 et 4 inclus.

6. Utilisation selon l'une quelconque des revendications 1-3, **caractérisée en ce que** le produit bitumineux est un béton bitumineux à l'émulsion.

7. Utilisation selon la revendication 6, **caractérisée en ce que** dans la formule (I) :
- R¹ et R² sont identiques et sont chacun choisis parmi les groupes éthyle, n-propyle, isopropyle, n-butyle, isobutyle, n-pentyle, isoamyle, hexyle, n-hexyle, isooctyle, 2-éthylhexyle, 2-propylhexyle ;
- X et Y sont avantageusement des esters, de préférence des esters de diacides (-X-= -O-(C=O)- ; et -Y- = -(C=O)-O-) ou des esters de diols (-X- = -(C=O)-O- et -Y- = -O-(C=O)-)
- R est un radical de formule -(CH₂)ᵣ-, où r est un nombre moyen compris entre 2 et 4 inclus.

8. Utilisation selon la revendication 6 ou 7, **caractérisée en ce que** la composition comprend également un composé de formule (II), en particulier avec
- R¹ et R² sont identiques et sont chacun méthyle ;
- X et Y sont avantageusement des esters, de préférence des esters de diacides (-X-= -O-(C=O)- ; et -Y- = -(C=O)-O-) ou des esters de diols (-X- = -(C=O)-O- et -Y- = -O-(C=O)-)
- R est un radical de formule -(CH₂)ᵣ-, où r est un nombre moyen compris entre 2 et 4 inclus.

9. Utilisation selon l'une quelconque des revendications 6 à 8, **caractérisée en ce que** la composition comprend également un composé de formule (II), en particulier avec
- R¹ et R² sont identiques et sont chacun méthyle ;
- X et Y sont avantageusement des esters, de préférence des esters de diacides (-X-= -O-(C=O)- ; et -Y- = -(C=O)-O-) ou des esters de diols (-X- = -(C=O)-O- et -Y- = -O-(C=O)-)
- le groupe R est choisi parmi les groupes suivants : le groupe R_{MG} de formule -CH(CH₃)-CH₂-CH₂-, le groupe R_{ES} de formule -CH(C₂H₅)-CH₂-, et leurs mélanges.

10. Utilisation selon l'une quelconque des revendications 6 à 9, **caractérisée en ce que** le liant hydrocarboné comprend 1 à 25% en poids dudit composé de formule (I), par rapport au poids total du liant hydrocarboné et, le cas échéant, 0,1 à 5% en poids dudit composé de formule (II), par rapport au poids total du liant hydrocarboné.

11. Utilisation selon l'une quelconque des revendications 1-3, **caractérisée en ce que** le produit bitumineux est un enrobé à chaud ou un enrobé tiède.

12. Utilisation selon la revendication 11, **caractérisée en ce que** dans la formule (I)
- R¹ et R² sont identiques et sont chacun choisis parmi les groupes éthyle, n-propyle, isopropyle, n-butyle, isobutyle, n-pentyle, isoamyle, hexyle, n-hexyle, isooctyle, 2-éthylhexyle, 2-propylhexyle ;
- X et Y sont avantageusement des esters, de préférence des esters de diacides (-X-= -O-(C=O)- ; et -Y- = -(C=O)-O-) ou des esters de diols (-X- = -(C=O)-O- et -Y- = -O-(C=O)-)
- R est un radical de formule -(CH₂)ᵣ-, où r est un nombre moyen compris entre 2 et 4 inclus.

13. Utilisation selon la revendication 11 ou 12, **caractérisée en ce que** le liant hydrocarboné comprend 1 à 30% en poids dudit composé de formule (I), par rapport au poids total du liant hydrocarboné.

14. Utilisation selon l'une quelconque des revendications 1-3, **caractérisée en ce que** le produit bitumineux est un enrobé stockable.

15. Utilisation selon l'une quelconque des revendications 1-3, **caractérisée en ce que** le produit bitumineux est un matériau bitumineux coulé à froid.

## Patentansprüche

1. Verwendung mindestens einer Verbindung als Flussmittel, die folgender Formel (I) entspricht
R¹-X-R-Y-R² (I)
wobei:
R¹ und R², die identisch oder verschieden sind, lineare oder verzweigte Kohlenwasserstoffketten, in C₂-C₁₁, sind;
jedes von -X- und -Y-, die identisch oder verschieden sind, eine Gruppe -O-(C=O)-; -(C=O)-; -NR'-(C=O)- ist, mit R', das ein Wasserstoffatom oder ein Alkylradikal in C₁-C₄ darstellt, oder -(C=O)-NR'- mit R', das ein Wasserstoffatom oder ein Alkylradikal in C₁-C₄ darstellt,
die Gruppe -R- eine divalente Kohlenwasserstoffkette, in C₁-C₁₀, ist, die linear oder verzweigt und eventuell unterbrochen ist durch ein oder mehrere Wasserstoffatome in einer Verbindung, umfassend ein Kohlenwasserstoffbindemittel, für die Vorbereitung eines bituminösen Produkts auf der Basis von mineralischen Feststoffteilchen in Kontakt mit dem Kohlenwasserstoffbindemittel,
wobei die Verbindung der Formel (I) in der Zusammensetzung vorhanden ist, wenn die Zusammensetzung mit den mineralischen Feststoffteilchen in Kontakt gebracht wird.

2. Verwendung nach Anspruch 1, **dadurch gekennzeichnet, dass** die Verbindung der Formel (I) zu der Zusammensetzung, umfassend das Kohlenwasserstoffbindemittel, gemäß der einen und/oder der anderen der 3 folgenden, kompatiblen Varianten hinzugefügt wird:
i. Variante 1: die Verbindung der Formel (I) wird mindestens teilweise (falls die Variante 2 und/oder die Variante 3 ebenfalls angewendet werden) oder sogar zur Gänze (andernfalls) zu der Zusammensetzung, umfassend das Kohlenwasserstoffbindemittel, hinzugefügt, dann wird die Zusammensetzung, umfassend die Verbindung der Formel (I), mit den mineralischen Feststoffteilchen in Kontakt gebracht, bevor die Verbindung der Formel (I) vollständig aus der Zusammensetzung verdampft, (mit anderen Worten ist die Verbindung der Formel (I) noch mindestens teilweise in der Zusammensetzung vorhanden, wenn sie mit den mineralischen Feststoffteilchen in Kontakt gebracht wird, vorzugsweise in einer ausreichenden Menge in der Zusammensetzung, um darin ein Flussmittelrolle sicherzustellen);
und/oder
ii. Variante 2: die Verbindung der Formel (I) wird mindestens teilweise (falls die Variante 1 und/oder die Variante 3 ebenfalls angewendet werden) oder sogar zur Gänze (andernfalls) gleichzeitig mit den mineralischen Feststoffteilchen zu der Zusammensetzung, umfassend das Kohlenwasserstoffbindemittel, hinzugefügt;
und/oder
iii. Variante 3: die Verbindung der Formel (I) wird mindestens teilweise (falls die Variante 1 und/oder die Variante 2 ebenfalls angewendet werden) oder sogar zur Gänze (andernfalls) zu einem Vorgemisch hinzugefügt, das die mineralischen Feststoffteilchen und die Zusammensetzung, umfassend das Kohlenwasserstoffbindemittel, enthält.

3. Verwendung nach Anspruch 1 oder 2, **dadurch gekennzeichnet, dass** die Zusammensetzung des Weiteren eine Verbindung umfasst, die der Formel (II) entspricht
R¹-X-R-Y-R² (II)
wobei:
R¹ und R², die identisch oder verschieden sind, lineare oder verzweigte Kohlenwasserstoffketten, in C₁-C₁₁, sind; und wobei mindestens eines von R¹, R² ein Methylradikal ist, -X- und -Y-, -R- so wie für die Formel (I) in Anspruch 1 definiert sind.

4. Verwendung nach einem der vorstehenden Ansprüche, **dadurch gekennzeichnet, dass** das bituminöse Produkt eine Oberflächenbeschichtung ist.

5. Verwendung nach Anspruch 4, **dadurch gekennzeichnet, dass** in der Formel (I):
- R¹ und R² identisch sind und jeweils gewählt werden aus den Gruppen Ethyl, n-Propyl, Isopropyl, n-Butyl, Isobutyl, n-Pentyl, Isoamyl, Hexyl, n-Hexyl, Isooctyl, 2-Ethylhexyl, 2-Propylhexyl;
- X und Y vorteilhafterweise Ester sind, vorzugsweise Disäureester (-X- = -O-(C=O)-; und -Y- = - (C=O)-O-) oder Diolester (-X- = -(C=O)-O- und -Y- = -0-(C=O)-)
- R ein Radikal der Formel - (CH₂)ᵣ- ist, wobei r eine Durchschnittszahl ist, die zwischen 2 und 4 eingeschlossen beträgt.

6. Verwendung nach einem der Ansprüche 1-3, **dadurch gekennzeichnet, dass** das bituminöse Produkt ein Asphaltbeton mit Emulsion ist.

7. Verwendung nach Anspruch 6, **dadurch gekennzeichnet, dass** in der Formel (I):
- R¹ und R² identisch sind und jeweils gewählt werden aus den Gruppen Ethyl, n-Propyl, Isopropyl, n-Butyl, Isobutyl, n-Pentyl, Isoamyl, Hexyl, n-Hexyl, Isooctyl, 2-Ethylhexyl, 2-Propylhexyl;
- X und Y vorteilhafterweise Ester sind, vorzugsweise Disäureester (-X- = -O-(C=O)-; und -Y- = - (C=O)-O-) oder Diolester (-X- = -(C=O)-O- und -Y- = -0-(C=O)-)
- R ein Radikal der Formel - (CH₂)ᵣ- ist, wobei r eine Durchschnittszahl ist, die zwischen 2 und 4 eingeschlossen beträgt.

8. Verwendung nach Anspruch 6 oder 7, **dadurch gekennzeichnet, dass** die Zusammensetzung ebenfalls eine Verbindung der Formel (II) umfasst, insbesondere mit
- R¹ und R², die identisch sind und jeweils Methyl sind;
- X und Y, die vorteilhafterweise Ester sind, vorzugsweise Disäureester (-X- = -O-(C=O)-; und -Y- = - (C=O)-O-) oder Diolester (-X- = -(C=O)-O- und -Y- = -0-(C=O)-)
- R, das ein Radikal der Formel -(CH₂)ᵣ- ist, wobei r eine Durchschnittszahl ist, die zwischen 2 und 4 eingeschlossen beträgt.

9. Verwendung nach einem der Ansprüche 6 bis 8, **dadurch gekennzeichnet, dass** die Zusammensetzung ebenfalls eine Verbindung der Formel (II) umfasst, insbesondere mit
- R¹ und R², die identisch sind und jeweils Methyl sind;
- X und Y, die vorteilhafterweise Ester sind, vorzugsweise Disäureester (-X- = -O-(C=O)-; und -Y- = - (C=O)-O-) oder Diolester (-X- = -(C=O)-O- und -Y- = -0-(C=O)-)
- der Gruppe R, die gewählt wird aus folgenden Gruppen: der Gruppe R_{MG} der Formel -CH(CH₃)-CH₂-CH₂-, der Gruppe R_{ES} der Formel -CH(C₂H₅)-CH₂- und ihren Gemischen.

10. Verwendung nach einem der Ansprüche 6 bis 9, **dadurch gekennzeichnet, dass** das Kohlenwasserstoffbindemittel 1 bis 25 Gew.-% der Verbindung der Formel (I) im Verhältnis zum Gesamtgewicht des Kohlenwasserstoffbindemittels und gegebenenfalls 0,1 bis 5 Gew.-% der Verbindung der Formel (II) im Verhältnis zum Gesamtgewicht des Kohlenwasserstoffbindemittels umfasst.

11. Verwendung nach einem der Ansprüche 1-3, **dadurch gekennzeichnet, dass** das bituminöse Produkt ein Heißmischgut oder ein halbwarmes Mischgut ist.

12. Verwendung nach Anspruch 11, **dadurch gekennzeichnet, dass** in der Formel (I)
- R¹ und R² identisch sind und jeweils gewählt werden aus den Gruppen Ethyl, n-Propyl, Isopropyl, n-Butyl, Isobutyl, n-Pentyl, Isoamyl, Hexyl, n-Hexyl, Isooctyl, 2-Ethylhexyl, 2-Propylhexyl;
- X und Y vorteilhafterweise Ester sind, vorzugsweise Disäureester (-X- = -O-(C=O)-; und -Y- = - (C=O)-O-) oder Diolester (-X- = -(C=O)-O- und -Y- = -0-(C=O)-)
- R ein Radikal der Formel - (CH₂)ᵣ- ist, wobei r eine Durchschnittszahl ist, die zwischen 2 und 4 eingeschlossen beträgt.

13. Verwendung nach Anspruch 11 oder 12, **dadurch gekennzeichnet, dass** das Kohlenwasserstoffbindemittel 1 bis 30 Gew.-% der Verbindung der Formel (I) im Verhältnis zum Gesamtgewicht des Kohlenwasserstoffbindemittels umfasst.

14. Verwendung nach einem der Ansprüche 1-3, **dadurch gekennzeichnet, dass** das bituminöse Produkt ein lagerfähiges Mischgut ist.

15. Verwendung nach einem der Ansprüche 1-3, **dadurch gekennzeichnet, dass** das bituminöse Produkt ein kalt aufgebrachtes bituminöses Material ist.

## Claims

1. Use as fluxing agent, of at least one compound complying with formula (I)
R¹-X-R-Y-R² (I)
where:
R¹ and R², identical or different, are hydrocarbon chains, linear or branched, in C₂-C₁₁;
each of -X- and -Y-, identical or different, is a group -O-(C=O)-; -(C=O)-O-; -NR'-(C=O)- with R' representing a hydrogen atom or a C₁-C₄ alkyl radical, or -(C=O)-NR'- with R' representing a hydrogen atom or a C₁-C₄ alkyl radical,
the group -R- is a divalent C₁-C₁₀ hydrocarbon linear or branched chain and optionally interrupted by one or more oxygen atoms
in a composition comprising a hydrocarbon binder for the preparation of a bituminous product based on solid mineral particles in contact with said hydrocarbon binder,
where said compound of formula (I) is present in said composition when said composition is brought into contact with said solid mineral particles.

2. The use according to claim 1, **characterised in that** the compound of formula (I) is added to the composition comprising the hydrocarbon binder according to one and/or the other of the following 3 compatible variants:
i.variant 1: the compound of formula (I) is added at least in part (if variant 2 and/or 3 is also implemented), or even entirely (if not), to the composition comprising the hydrocarbon binder, then the composition comprising the compound of formula (I) is brought into contact with the solid mineral particles before complete evaporation of the compound of formula (I) out of the composition, (in other words, said compound of formula (I) is still present at least partly in the composition when it is brought into contact with the solid mineral particles, preferably in an amount sufficient in the composition to ensure a fluxing role therein);
and/or
ii.variant 2: the compound of formula (I) is added at least in part (if variant 1 and/or 3 is also implemented), or even entirely (if not), at the same time as the solid mineral particles to the composition comprising the hydrocarbon binder;
and/or
iii.variant 3: the compound of formula (I) is added at least in part (if variant 1 and/or 2 is also implemented), or even entirely (if not), to a premix containing the solid mineral particles and the composition comprising the hydrocarbon binder.

3. The use according to claim 1 or 2, **characterised in that** the composition further comprises a compound complying with formula (II)
R¹-X-R-Y-R² (II)
where:
R¹ and R², identical or different, are linear or branched hydrocarbon chains, in C₁-C₁₁; and
where at least one of R¹, R² is a methyl radical
-X- and -Y-, -R- are as defined for formula (I) in claim 1.

4. The use according to any one of the preceding claims, **characterised in that** the bituminous product is a surface dressing.

5. The use according to claim 4, **characterised in that** in formula (I):
- R¹ and R² are identical and are each selected from ethyl, n-propyl, isopropyl, n-butyl, isobutyl, n-pentyl, isoamyl, hexyl, n-hexyl, isooctyl, 2-ethylhexyl, 2-propylhexyl groups;
- X and Y are advantageously esters, preferably esters of diacids (-X- = -O-(C=O)-; and -Y- = -(C=O)-O-) or esters of diols (-X- = -(C=O)-O- and Y- = -O-(C=O)-)
- R is a radical of formula -(CH₂)ᵣ-, where r is an average number comprised between 2 and 4 included.

6. The use according to any one of claims 1-3, **characterised in that** the bituminous product is a bituminous concrete in emulsion.

7. The use according to claim 6, **characterised in that** in formula (I):
- R¹ and R² are identical and are each selected from ethyl, n-propyl, isopropyl, n-butyl, isobutyl, n-pentyl, isoamyl, hexyl, n-hexyl, isooctyl, 2-ethylhexyl, 2-propylhexyl groups;
- X and Y are advantageously esters, preferably esters of diacids (-X- = -O-(C=O) -; and -Y- = - (C=O) -O-) or esters of diols (-X- = - (C=O)-O- and Y- = -O-(C=O)-)
- R is a radical of formula - (CH₂)ᵣ-, where r is an average number comprised between 2 and 4 included.

8. The use according to claim 6 or 7, **characterised in that** the composition also comprises a compound of formula (II), in particular with
- R¹ and R² are identical and are each methyl;
- X and Y are advantageously esters, preferably esters of diacids (-X- = -O-(C=O)-; and -Y- = - (C=O)-O-) or esters of diols (-X- = -(C=O)-O- and Y- = -O-(C=O)-)
- R is a radical of formula -(CH₂)ᵣ-, where r is an average number comprised between 2 and 4 included.

9. The use according to any one of claims 6 to 8, **characterised in that** the composition also comprises a compound of formula (II), in particular with
- R¹ and R² are identical and are each methyl;
- X and Y are advantageously esters, preferably esters of diacids (-X- = -O-(C=O)-; and -Y- = -(C=O)-O-) or esters of diols (-X- = -(C=O)-O- and Y- = -O-(C=O)-)
- the group R is selected from the following groups: the R_{MG} group of formula - CH(CH₃)-CH₂-CH₂-, the R_{ES} group of formula -CH(C₂H₅)-CH₂-, and their mixtures.

10. The use according to any one of claims 6 to 9, **characterised in that** the hydrocarbon binder comprises 1 to 25% by weight of said compound of formula (I), relative to the total weight of the hydrocarbon binder and, where appropriate, 0.1 to 5% by weight of said compound of formula (II), relative to the total weight of the hydrocarbon binder.

11. The use according to any one of claims 1-3, **characterised in that** the bituminous product is a hot mix or a warm mix.

12. The use according to claim 11, **characterised in that** in formula (I)
- R¹ and R² are identical and are each selected from ethyl, n-propyl, isopropyl, n-butyl, isobutyl, n-pentyl, isoamyl, hexyl, n-hexyl, isooctyl, 2-ethylhexyl, 2-propylhexyl groups;
- X and Y are advantageously esters, preferably esters of diacids (-X- = -O-(C=O)-; and -Y- = -(C=O)-O-) or esters of diols (-X- = and Y- = -O-(C=O)-)
- R is a radical of formula - (CH₂)ᵣ-, where r is an average number comprised between 2 and 4 included.

13. The use according to claim 11 or 12, **characterised in that** the hydrocarbon binder comprises 1 to 30% by weight of said compound of formula (I), relative to the total weight of the hydrocarbon binder.

14. The use according to any one of claims 1-3, **characterised in that** the bituminous product is a storable asphalt mix.

15. The use according to any one of claims 1-3, **characterised in that** the bituminous product is a cold-cast bituminous material.
